# EUROPÄISCHE PATENTSCHRIFT

(11) **EP 2 631 131 B1**
(45) Veröffentlichungstag und Bekanntmachung des Hinweises auf die Patenterteilung: **27.07.2016**
(21) Anmeldenummer: 13155672.2
(22) Anmeldetag: 18.02.2013
(51) Int. Cl.: B60T 13/26, B60T 13/58, B60T 17/04

(54) **Landwirtschaftliches Zugfahrzeug**
Agricultural tractor
Véhicule de traction agricole

(30) Priorität: 24.02.2012 DE 102012101501
(43) Veröffentlichungstag der Anmeldung: 28.08.2013
(73) Patentinhaber: Haldex Brake Products GmbH, 69123 Heidelberg (DE)
(72) Erfinder: Sulzyc, Georg, 68305 Mannheim (DE)
(74) Vertreter: REHBERG HÜPPE + PARTNER

(56) Entgegenhaltungen:
- DE-A1- 19 955 797
- DE-A1-102009 045 191
- FR-A- 1 186 497

## Beschreibung

### TECHNISCHES GEBIET DER ERFINDUNG

Die vorliegende Erfindung betrifft ein landwirtschaftliches Zugfahrzeug, welches über eine hydraulische Bremsanlage sowie eine pneumatische Bremsanlage für einen Anhänger, welcher optional mit dem Zugfahrzeug koppelbar ist, verfügt. Um lediglich ein nicht beschränkendes Beispiel zu nennen, kann es sich bei dem Anhänger um einen Drechselanhänger handeln, der zwei- oder mehrachsig ausgebildet sein kann.

Des Weiteren betrifft die Erfindung einen besonderen pneumatischen Kupplungskopf, welcher insbesondere Einsatz finden kann für ein landwirtschaftliches Zugfahrzeug der zuvor erläuterten Art, wobei über den pneumatischen Kupplungskopf Druckluft zwischen Zugfahrzeug und Anhänger übertragbar ist. Überträgt der pneumatische Kupplungskopf Druckluft von dem Zugfahrzeug zu dem Anhänger zur Bereitstellung eines Druckluftvorrats, kann es sich bei dem Kupplungskopf um einen so genannten "Kupplungskopf Vorrat" handeln. Überträgt der Kupplungskopf hingegen einen pneumatischen Bremssteuerdruck von dem Zugfahrzeug zu dem Anhänger, kann es sich bei dem Kupplungskopf um einen so genannten "Kupplungskopf Bremse" handeln.

### STAND DER TECHNIK

Beispielsweise aus EP 0 832 803 B1 ist der grundsätzliche Aufbau eines mit einem Zugfahrzeug und einem Anhänger gebildeten Zugs bekannt. Das Zugfahrzeug wird hierbei über eine hydraulische Bremsanlage je nach Betätigung eines Bremspedals gebremst. Das Zugfahrzeug besitzt eine pneumatische Bremsanlage, über welche eine Druckluftbremsanlage des Anhängers mit Druckluft versorgt und deren Betätigung gesteuert wird. Hierzu verfügt die pneumatische Bremsanlage des Zugfahrzeugs über einen Kompressor, der über einen Druckregler einen Behälter mit Druckluft versorgt. Direkt an den Behälter ist der Kupplungskopf Vorrat angeschlossen, über welchen der Anhänger mit Druckluft versorgt wird. Zwischen einen Kupplungskopf Bremse und den Behälter ist ein Anhängersteuerventil zwischengeschaltet. Das Anhängersteuerventil erzeugt in Abhängigkeit der Betätigung des Bremspedals durch den Fahrer und damit in Abhängigkeit des hydraulischen Drucks in der hydraulischen Bremsanlage einen pneumatischen Bremssteuerdruck. Hierzu verfügt das Anhängersteuerventil über zwei Steueranschlüsse für die zweikreisige hydraulische Bremsanlage. Das Anhängersteuerventil verfügt über einen zusätzlichen (nicht zwingend erforderlichen) pneumatischen Steueranschluss, über welchen der Bremssteuerdruck auch unabhängig von der Betätigung des Bremspedals beeinflusst werden kann. Die Beaufschlagung des pneumatischen Steueranschlusses erfolgt je nach Stellung eines Feststellbremshebels, wobei hier auch mehrere abgestufte Steuerdrücke je nach Stellung des Feststellbremshebels herbeiführbar sind.

DE 199 55 797 B4 offenbart ein Zugfahrzeug mit zweikreisiger hydraulischer Bremsanlage, bei welcher der Hydraulikdruck in den Kreisen über hydraulische Drucksensoren erfasst wird. Das Signal der hydraulischen Drucksensoren wird einer elektronischen Steuereinrichtung zugeführt. Entsprechend dem gemessenen hydraulischen Bremsdruck steuert dann die elektronische Steuereinrichtung elektromagnetische Ventileinrichtungen an, welche zwischen Behälter und den Kupplungskopf Vorrat sowie Kupplungskopf Bremse zwischengeschaltet sind, um einen dem Hydraulikdruck entsprechenden pneumatischen Bremssteuerdruck zu erzeugen. In einer Kupplungskopfleitung für den Bremssteuerdruck erfasst ein Drucksensor den Bremssteuerdruck, welcher dann ebenfalls der Steuereinrichtung zugeführt wird.

DE 10 2009 031 851 A1 betrifft ein gattungsgemäßes landwirtschaftliches Zugfahrzeug, nämlich einen Traktor. Beschrieben wird hier der zunehmende Einsatz stufenloser Getriebe mit hydrostatisch-mechanischer Leistungsverzweigung in landwirtschaftlichen Traktoren, welche eine stufenlose Veränderung einer Getriebeübersetzung ohne Kraftschlussunterbrechung bei Vorgabe durch den Fahrer über einen so genannten Power-Control-Hebel, ein Gaspedal oder einen Joystick ermöglichen. Mit einer Veränderung der Getriebeübersetzung und/oder Beeinflussung der Motordrehzahl kann auch eine Abbremsung des Traktors ermöglicht werden, wobei aus Bequemlichkeit oft dann auch auf eine Betätigung der Betriebsbremse über ein Bremspedal verzichtet wird. In derartigen Fällen erhält der Anhänger des Traktors weder ein Bremslichtsignal noch erfolgt die Herbeiführung einer Bremswirkung an dem Anhänger. Dies hat zur Folge, dass der Anhänger auf den Traktor "aufläuft" bzw. diesen "schiebt", was zu einem Einknicken des Gesamtgespanns, zu gefährlichen Situationen im Straßenverkehr, zu einem Verlust der Traktion der Räder des Traktors, zu erhöhtem Verschleiß von Getriebe, Motor und Rädern des Traktors u. ä. führen kann. DE 10 2009 031 851 A1 schlägt vor, in dem Zugfahrzeug ein entsprechend programmiertes elektronisches Steuergerät vorzusehen, welches die Bremsanlage des Anhängers auch ohne Betätigung der Betriebsbremsen des Zugfahrzeugs betätigt, wenn das Zugfahrzeug wie erläutert anderweitig abgebremst wird. Die Programmierung des Steuergeräts soll hierbei beispielsweise so erfolgen, dass die von dem Anhänger auf das Zugfahrzeug wirkende Schub- oder Kopplungskraft unterhalb eines vorbestimmten Schwellwerts gehalten wird. Eine Kenngröße für die Kopplungskraft soll beispielsweise aus der Differenz oder dem Quotienten der Ist-Motordrehzahl des Zugfahrzeugs und einer vorgegebenen Soll-Motordrehzahl ermittelt werden, wobei diese Drehzahlen insbesondere über einen CAN-Datenbus zur Verfügung stehen. Eine automatische Betätigung der Bremsanlage des Anhängers durch das Steuergerät kann beschränkt sein auf eine Vorwärtsfahrt des Zugfahrzeugs. Des Weiteren wird vorgeschlagen, die Stärke der Bremskraft des Anhängers, welche von dem Steuergerät vorgegeben wird, von der Fahrgeschwindigkeit abhängig zu machen. Zusätzlich kann während der automatischen Betätigung der Bremsanlage des Anhängers automatisch ein Bremslicht am Zugfahrzeug und/oder am Anhänger aktiviert werden. Möglich ist weiterhin die zeitliche Begrenzung der automatischen Betätigung der Bremsanlage des Anhängers zur Vermeidung einer Überbeanspruchung der Bremsen. Auch die automatische Betätigung der Bremsanlage des Anhängers für eine Stillstands-Bremssituation, also bei Erkennen des Vorliegens des Stillstands des Zugs mit unbetätigter Betriebsbremse, wird in der Druckschrift vorgeschlagen.

Gemäß DE 10 2008 048 208 A1 wird der pneumatische Bremssteuerdruck eines Anhängers einerseits über ein herkömmliches Anhängersteuerventil mit einem hydraulisch-pneumatischen Bremskreis und andererseits über einen elektro-pneumatischen Bremskreis erzeugt. Grundsätzlich erfolgt die Erzeugung des pneumatischen Bremssteuerdrucks auf herkömmliche Weise über das Anhängersteuerventil. In ausgewählten Betriebsbereichen, beispielsweise während des Ansprechbereichs des hydraulischen Bremskreises mit einem hydraulischen Bremsdruck unterhalb eines Ansprechdrucks, kann allerdings dem elektro-pneumatischen Bremskreis über eine Steuereinheit Vorrang eingeräumt werden, indem die Erzeugung des pneumatischen Bremssteuerdrucks in dem hydraulisch-pneumatischen Bremskreis über das Anhängersteuerventil "überbrückt" wird und der pneumatische Bremssteuerdruck ausschließlich über den elektro-pneumatischen Bremskreis gesteuert wird. Die Steuerung des pneumatischen Bremssteuerdrucks über den elektro-pneumatischen Bremskreis erfolgt durch eine Steuereinheit, welche elektropneumatische Ventile ansteuert, bspw. auf Grundlage eines Messsignals des Pedalwegs des Bremspedals oder eines gemessenen hydraulischen Drucks.

DE 10 2009 045 191 A1 offenbart ein Anhängersteuerventil, bei welchem eine erste Kolbenfläche mit dem hydraulischen Bremsdruck beaufschlagt wird, während eine zweite Kolbenfläche von einem Pneumatikdruck beaufschlagt wird. Bereits vor Erreichen eines Ansprechdrucks kann über den Pneumatikdruck an der zweiten Kolbenfläche das Ansprechverhalten der pneumatischen Bremsanlage für den Anhänger beeinflusst werden. Des Weiteren wird vorgeschlagen, dass auch während des Fahrbetriebs das Ausmaß der Beaufschlagung der zweiten Kolbenfläche mit dem Pneumatikdruck abhängig von Fahrbetriebsbedingungen gesteuert oder geregelt wird, was beispielsweise die Dauer, den zeitlichen Verlauf und den Betrag der Beaufschlagung durch den Pneumatikdruck betrifft.

DE 10 2005 042 673 A1, DE 42 30 674 A1 und DE 199 55 798 A1 beschreiben die Erfassung des Drucks in einer Zuführleitung zu einem Kupplungskopf über einen elektropneumatischen Sensor. Eine Erkennung, ob der Kupplungskopf an einen Gegen-Kupplungskopf angeschlossen ist, ist in diesem Fall ermöglicht durch aufwendige Test- und Auswerteverfahren, wie diese bspw. in DE 199 55 798 A1 im Detail beschrieben sind.

Ein landwirtschaftliches Zugfahrzeug mit einer hydraulischen Bremsanlage und einer pneumatischen Bremsanlage für einen mit dem Zugfahrzeug koppelbaren Anhänger ist aus der gattungsbildenden DE 88 07 872 U1 bekannt.

DE 10 2010 038 766 A1 offenbart die Erfassung des Kupplungszustands eines Kupplungskopfs über elektromechanische Kontaktelemente.

### AUFGABE DER ERFINDUNG

Der Erfindung liegt die Aufgabe zugrunde, ein landwirtschaftliches Zugfahrzeug hinsichtlich der Möglichkeiten einer Berücksichtigung, ob an dieses ein Anhänger angekoppelt ist oder nicht, zu verbessern. Diese Verbesserung betrifft insbesondere eine Verbesserung
- des Antriebsverhaltens,
- des Bremsverhaltens,
- der Fahrstabilität,
- der Kopplungskraft und/oder der Fahrdynamik.

Weiterhin betrifft die Erfindung die Aufgabe, einen pneumatischen Kupplungskopf mit erweiterten Funktionalitäten vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der vorliegenden Erfindung liegt die Erkenntnis zugrunde, dass sich die Eigenschaften eines Zugfahrzeugs im Betrieb signifikant ändern in Abhängigkeit davon, ob das Zugfahrzeug mit einem Anhänger gekoppelt ist oder nicht. Um lediglich einige Beispiele zu nennen, ist das Antriebsaggregat der Zugmaschine hinsichtlich der Leistung derart dimensioniert, dass die Zugmaschine auch einen voll beladenen Anhänger ziehen kann. Ohne Anhänger verfügt die Zugmaschine somit über einen Leistungsüberschuss, welcher zu einem Durchrutschen der angetriebenen Räder bei Beschleunigungsvorgängen führen kann. Auch eine Geschwindigkeit, mit welcher sich die Zugmaschine ohne Verlust der Traktion, ohne Über- und Untersteuern sowie ohne Kippen durch eine Kurve bewegen kann, kann davon abhängig sein, ob an das Zugfahrzeug ein Anhänger angekoppelt ist oder nicht. Aus diesem Grund kann eine automatisierte Detektierung dahingehend, ob ein Anhänger an das Zugfahrzeug angekoppelt ist, von Interesse sein.

Bekannt sind durchaus Kopplungssensoren, welche im mechanischen Kraftfluss zwischen Zugfahrzeug und Anhänger angeordnet sind. Derartige Kopplungssensoren können durch die mechanische Beaufschlagung im Kraftfluss zwischen Anhänger und Zugfahrzeug geschaltet werden mit dem Koppeln und Entkoppeln von Zugfahrzeug und Anhänger. Ebenfalls möglich ist, dass ein Kopplungssensor eine Kopplungskraft, also eine Zug- oder Schubkraft zwischen Anhänger und Zugfahrzeug, erfasst. Allerdings sind derartige, im mechanischen Kraftfluss angeordnete Kopplungssensoren sehr teuer. Des Weiteren müssen die Kopplungssensoren auch dem rauen Betrieb bei der Herstellung und dem Lösen der mechanischen Kopplung einsetzbar sein, so dass diese robust ausgebildet sein müssen. Schließlich müssen diese große Kopplungskräfte aufnehmen können, wenn diese unmittelbar im Kraftfluss zwischen Zugfahrzeug und Anhänger angeordnet sind.

Erfindungsgemäß wird überraschend nicht ein Kopplungssensor eingesetzt, welcher im mechanischen Kraftfluss zur Übertragung der Kopplungskräfte zwischen Zugfahrzeug und Anhänger eingesetzt ist. Vielmehr findet unabhängig (und unter Umständen auch räumlich beabstandet) von dieser mechanischen Kopplung eine Erfassung des Kopplungszustands im Bereich eines pneumatischen Kupplungskopfs statt, über welchen bei angekuppeltem Gegen-Kupplungskopf des Anhängers Druckluft zwischen dem Zugfahrzeug und dem Anhänger übertragen wird. Hierbei handelt es sich insbesondere um den Kupplungskopf Bremse und/oder den Kupplungskopf Vorrat.

Die Erfindung schlägt vor, in den Kupplungskopf ein Ventil zu integrieren. Neben der in dem Kupplungskopf ohnehin vorhandenen Kupplungskopfleitung besitzt der Kupplungskopf auch eine Zweigleitung. Das genannte Ventil ist zwischen die Kupplungskopfleitung und die Zweigleitung zwischengeschaltet. Mit dem Ankuppeln des Gegen-Kupplungskopfs, also der Herstellung der pneumatischen Verbindung zwischen Zugfahrzeug und Anhänger, welche üblicherweise erste nach der mechanischen Kopplung des Zugfahrzeugs mit dem Anhänger erfolgt, wird das Ventil automatisch in eine Öffnungsstellung überführt, in der die Kupplungskopfleitung mit der Zweigleitung pneumatisch verbunden ist. Somit wird erst mit dem Ankuppeln des Gegen-Kupplungskopfs an den Kupplungskopf mit integriertem Ventil die Zweigleitung mit dem Druck in der Kupplungskopfleitung beaufschlagt. Somit hängen letztendlich die Druckverhältnisse in der Zweigleitung davon ab, ob der Kupplungskopf mit dem Gegen-Kupplungskopf gekoppelt ist oder nicht, also ob der Anhänger und das Zugfahrzeug pneumatisch miteinander verbunden sind oder nicht.

Erfindungsgemäß wird vor diesem Hintergrund vorgeschlagen, dass ein Sensor den Druck in der Zweigleitung erfasst, so dass ein elektrisches Drucksignal vorliegt, welches davon abhängig ist, ob der Gegen-Kupplungskopf an den Kupplungskopf angekuppelt ist oder nicht. Letztendlich gibt somit das elektrische Ausgangssignal des Sensors Aufschluss darüber, ob das Zugfahrzeug pneumatisch mit dem Anhänger gekoppelt ist oder nicht.

Die vorliegende Erfindung modifiziert einen Kupplungskopf mit integriertem Ventil, welcher in der Einbauanleitung 355 026 zu dem Produkt "G 819", nämlich einem Anhänger-Steuerventil, gemäß Ausgabe Dezember 1982 aus dem Unternehmen der Rechtsvorgängerin der Anmelderin bekannt ist: In dieser Einbauanleitung ist ein Einbaubeispiel für einen Lastkraftwagen beschrieben, bei dem von einem Ausgangsanschluss 21 des Anhängersteuerventils Vorratsdruckluft einer Kupplungskopfleitung eines Kupplungskopfs Vorrat zugeführt wird. Der Kupplungskopf besitzt ein integriertes Kippventil, welches für nicht pneumatisch angeschlossenen Anhänger in einer Schließstellung ist. Mit Ankuppeln des Anhängers wird das Kippventil in seine Öffnungsstellung gekippt, was zur Folge hat, dass das Kippventil die Kupplungskopfleitung mit einer Zweigleitung verbindet. Diese Zweigleitung ist pneumatisch zu dem Anhängersteuerventil zurückgeführt. Die derart über die Zweigleitung rückgeführte Druckluft kann damit in Abhängigkeit davon, ob das Zugfahrzeugs pneumatisch mit dem Anhänger gekoppelt ist, die Druckluftverhältnisse an dem Anhängersteuerventil und dessen Betriebsstellung verändern, also pneumatisch das Anhängersteuerventil schalten.

Abweichend hierzu schlägt die Erfindung die Nutzung einer Verbindung einer Kupplungskopfleitung mit einer Zweigleitung über ein Ventil, dessen Schaltstellung abhängig ist davon, ob an dem Kupplungskopf ein Gegen-Kupplungskopf angekuppelt ist, in Verbindung mit einem elektrischen Sensor vor, so dass erfindungsgemäß ein neuer "elektrischer Kopplungssensor" gebildet ist. Dieser Kopplungssensor erzeugt ein elektrisches Signal, welches auf vielfältige Weise nutzbar ist und einfach über eine elektrische Leitung, bspw. einen CAN-Bus, übertragbar ist. Von Vorteil ist auch, dass der derart gebildete "Kopplungssensor" abseits der mechanischen Kopplung zwischen Zugfahrzeug und Anhänger angeordnet sein kann. Die erfindungsgemäße Ausgestaltung stellt nur eine geringfügige Modifikation eines an sich bekannten Kupplungskopfs dar, welche dennoch zuverlässig den Kupplungszustand zwischen Zugfahrzeug und Anhänger erfasst und ein mit dem Kupplungszustand korrelierendes elektrisches Signal erzeugt.

Ohne dass dieses zwingend der Fall sein muss, ist in bevorzugter Ausgestaltung der Erfindung ohne angekuppelten Gegen-Kupplungskopf die Zweigleitung entlüftet. Diese Entlüftung kann auch durch das in den Kupplungskopf integrierte Ventil erfolgen. Beispielsweise erfolgt die Entlüftung der Zweigleitung durch einen Ventilkörper des integrierten Ventils hindurch und/oder die Entlüftung erfolgt über eine Ausgangsöffnung des Ventils, welche für angeschlossenen Gegen-Kupplungskopf für die pneumatische Verbindung zwischen Kupplungskopf und Gegen-Kupplungskopf genutzt wird.

Möglich ist, dass im Rahmen der vorliegenden Erfindung das elektrische Ausgangssignal des Sensors ausschließlich genutzt wird, um zu ermitteln, ob der Anhänger an das Zugfahrzeug angekuppelt ist oder nicht. Möglich ist aber auch, dass unter Umständen nach einer Erkennung, dass der Anhänger an das Zugfahrzeug angekuppelt ist, über den Sensor auch eine Art Drucküberwachung in der Zweigleitung und damit an dem Kupplungskopf erfolgt. Handelt es sich beispielsweise um den Kupplungskopf Vorrat, kann ein Abfallen des Drucks als Indiz dafür gewertet werden, dass ein großer Druckluftverbrauch im Bereich des Anhängers auftritt, so dass ein Förderbetrieb eines Kompressors initiiert werden muss oder die Förderleistung des Kompressors erhöht wird. Ebenfalls möglich ist, dass über einen Druckabfall erkannt wird, wenn es zu einer Leckage im Bereich der Vorratsleitung kommt und/oder es zu einem Abriss der Vorratsleitung kommt. Handelt es sich hingegen bei dem Kupplungskopf um einen Kupplungskopf Bremse, kann über den Sensor der Bremssteuerdruck überwacht werden, womit unter Umständen auch eine Regelung des Bremssteuerdrucks ermöglicht ist oder ein Leitungsdefekt erkannt werden kann. Für die genannten Ausführungsbeispiele ist somit der Sensor multifunktional einsetzbar.

Möglich ist, dass das von dem Sensor erzeugte elektrische Signal beliebig genutzt wird. Um lediglich ein Beispiel zu nennen, kann das elektrische Signal, insbesondere bei entsprechender Verstärkung, unmittelbar einem Aktuator, Ventil o. ä. zugeführt werden, so dass aufgrund des elektrischen Signals ein Betriebszustand eines Bauelements des landwirtschaftlichen Zugfahrzeugs verändert werden kann. Für eine bevorzugte Ausgestaltung der Erfindung wird aber das von dem Sensor erzeugte elektrische Signal einer Steuereinheit zugeführt. Unter einer derartigen Steuereinheit wird eine einzige zentrale Steuereinheit verstanden oder auch das Zusammenwirken mehrerer Steuereinheitmodule, welche verteilt über das Fahrzeug angeordnet sein können und gleichen oder unterschiedlichen Zwecken dienen können. Möglich ist, dass die Kombination mehrerer Steuereinheitmodule oder die Zuführung des elektrischen Signals zu einer Steuereinheit über ein CAN-Bussystem erfolgt. Mittels der Steuereinheit kann dann das elektrische Signal vielfältig genutzt werden und ausgewertet werden, beispielsweise zur Ermittlung, ob der Anhänger an das Zugfahrzeug angekuppelt ist oder nicht, zur Überwachung des Drucks, um eine Leckage oder einen Abriss in der Vorratsleitung zu erkennen oder eine Überwachung oder Regelung des Bremssteuerdrucks vornehmen zu können. Mittels der Steuereinheit können dann je nach Ergebnis der Auswertung unterschiedliche Maßnahmen eingeleitet werden. Um lediglich ein einfaches Beispiels zu nennen, kann bei Erkennen, dass der Anhänger pneumatisch mit dem Zugfahrzeug gekuppelt ist, in der Fahrerkabine dem Fahrer eine entsprechende Information zur Anzeige gebracht werden, beispielsweise mit einer Leuchte "Anhänger pneumatisch angekuppelt".

Die genannten Bauelemente des landwirtschaftlichen Zugfahrzeugs und des Kupplungskopfs können beliebig ausgebildet sein als singuläre Bauelemente, als aneinander angeflanschte Module oder in ein gemeinsames Gehäuse integrierte Bauelemente. Für einen besonderen Vorschlag der Erfindung ist mit dem Kupplungskopf, dem Ventil und dem Sensor eine Baueinheit gebildet. Im einfachsten Fall ist diese mit weiteren Bauelementen ausschließlich über
- eine mechanische Befestigung an dem Zugfahrzeug,
- die Ausgangsöffnung zur Übergabe an den Gegen-Kupplungskopf des Anhängers,
- einen pneumatischen Anschluss für die Verbindung der Kupplungskopfleitung mit der Druckluftversorgung und
- einen elektrischen Anschluss, über welchen das Ausgangssignal des Sensors abgeführt wird,
verbunden. Diese Baueinheit kann separat handelsfähig sein und als Ganze mit dem landwirtschaftlichen Zugfahrzeug montiert werden. In einem gemeinsamen Gehäuse können dann auch die erforderlichen Bauelemente, insbesondere das Ventil und der Sensor geschützt gegen mechanische Beschädigungen und Verunreinigungen angeordnet sein.

Für eine alternative Ausgestaltung bilden der Kupplungskopf und das Ventil eine Baueinheit, während der Sensor entfernt von der Baueinheit angeordnet ist. Die Verbindung des Sensors und der Baueinheit erfolgt dann über die Zweigleitung oder eine hiermit verbundene pneumatische Leitung, welche aus dem Kupplungskopf herausgeführt ist.

Grundsätzlich kann das Ventil beliebig ausgebildet sein, beispielsweise auch als Schieberventil. Auch die Zahl der Stellungen und Anschlüsse des Ventils ist grundsätzlich beliebig, sofern ein definierter pneumatischer Zustand des Ventils vorliegt, wenn der Kupplungskopf an den Gegen-Kupplungskopf angekuppelt ist. Für eine besondere Ausgestaltung der Erfindung ist das Ventil als Sitzventil ausgebildet. In diesem Fall besitzt das Ventil einen Ventilkörper, der bei nicht angekuppeltem Gegen-Kupplungskopf über eine Feder gegen einen Ventilsitz gepresst wird, womit die Schließstellung zwischen Kupplungskopfleitung und Zweigleitung gewährleistet ist. Mit dem Ankuppeln des Gegen-Kupplungskopfs wird der Ventilkörper durch ein Kontaktelement von dem Ventilsitz weg bewegt, was unter Beaufschlagung der Feder erfolgt. Vorzugsweise erfolgt somit die Bewegung des Ventilkörpers bewegungsgesteuert mit dem Herstellen der Verbindung zwischen Gegen-Kupplungskopf und Kupplungskopf. Hierbei kann das Kontaktelement, über welches die Betätigung des Sitzventils erfolgt, mit einem Stößel gebildet sein, welcher auf den Ventilkörper einwirkt. Ebenfalls möglich ist, dass das Kontaktelement integraler Bestandteil des Ventilkörpers ist.

Weitere Aspekte der Erfindung widmen sich der Beeinflussungsmöglichkeiten des landwirtschaftlichen Zugfahrzeugs in Abhängigkeit von dem von dem Sensor erzeugten Signal, also in Abhängigkeit davon, ob das Zugfahrzeug mit dem Anhänger gekuppelt ist oder nicht bzw. die Zweigleitung druckbeaufschlagt ist oder nicht.

Für eine erste Ausgestaltung besitzt die Steuereinheit Steuerlogik, welche eine Antriebsleistung, eine Bremsleistung, eine Fahrstabilitätsregelung, eine Kopplungskraft und/oder eine Fahrdynamikregelung des Zugfahrzeugs in Abhängigkeit von dem von dem Sensor erzeugten Signal beeinflusst. Um hier lediglich einige nicht beschränkende Beispiele zu nennen, kann je nach dem von Sensor erzeugten Signal eine Beeinflussung des Motormanagements des Antriebsaggregats erfolgen. Möglich ist, dass je nach dem von dem Sensor erzeugten Signal unterschiedliche Kennlinien zwischen einer Leistungsvorgabe durch den Fahrer, insbesondere einem Pedalwinkel, und der Leistungsforderung an dem Antriebsaggregat, beispielsweise ein Drosselklappenwinkel, verwendet werden. Ebenfalls möglich ist, dass eine Leistungsbegrenzung erfolgt, wenn das von dem Sensor erfolgte Signal indiziert, dass kein Anhänger an dem Zugfahrzeug angekuppelt ist. Ebenfalls möglich ist, dass für ein von dem Sensor erzeugtes Signal, welches indiziert, dass der Anhänger angekuppelt ist, die Höchstgeschwindigkeit des Zugfahrzeugs mit Anhänger begrenzt wird.

In weiterer Ausgestaltung der Erfindung ist die Steuereinheit mit Steuerlogik ausgestattet, welche den Betriebszustand eines Getriebes in Abhängigkeit von dem von dem Sensor erzeugten Signal beeinflusst. So kann beispielsweise mit dem Erkennen, dass das Zugfahrzeug mit dem Anhänger gekuppelt ist, so dass eine größere Last gezogen werden muss, in dem Getriebe automatisiert eine kleinere Übersetzung oder eine andere Schaltkennlinie gewählt werden, um der größeren zu beschleunigenden Masse Rechnung zu tragen.

Als weitere Möglichkeit schlägt die Erfindung vor, dass die Steuereinheit mit Steuerlogik ausgestattet ist, welche eine Abbremsung des Zugfahrzeugs ohne Betätigung der Betriebsbremsen des Zugfahrzeugs erkennt. Liegt gleichzeitig ein Signal des Sensors vor, welches indiziert, dass ein Anhänger an das Zugfahrzeug angekuppelt ist, so wird ein Anhängersteuerventil so angesteuert, dass dieses einen pneumatischen Bremssteuerdruck für den Anhänger erzeugt. Somit kann ein Auflaufen des Anhängers vermieden oder reduziert werden, wenn infolge eines Schubbetriebs des Antriebsstrangs des Zugfahrzeugs eine Abbremsung des Zugfahrzeugs erfolgt, ohne dass die Betriebsbremsen des Zugfahrzeugs betätigt werden. Dies vereinfacht die Nutzung durch den Fahrer, da dieser im begrenzten Ausmaß auch eine Abbremsung beispielsweise über den Joystick oder eine Rücknahme eines Gaspedals herbeiführen kann. Andererseits wird durch die erfindungsgemäße Maßnahme bei einem derartigen Bremsbetrieb über den Antriebsstrang des Zugfahrzeugs die Bremslast gleichmäßig auf die Räder des Zugfahrzeugs und die Räder des Anhängers verteilt. Vorzugsweise erfolgt die Ansteuerung des Anhängersteuerventils in dem erläuterten Fall über eine elektrische oder elektromagnetische Steuerungsmöglichkeit, bei welcher ein Bremssteuerdruck des Anhängersteuerventils ausgesteuert wird, der abhängig ist von der Bremswirkung, die durch die Nutzung des Antriebsstrangs im Schubbetrieb hervorgerufen wird.

In einer besonderen Ausgestaltung dieses Lösungsgedankens erfolgt die Erkennung, dass eine Abbremsung des Zugfahrzeugs ohne Betätigung der Betriebsbremse des Zugfahrzeugs erfolgt, in Abhängigkeit der Stellung eines von dem Fahrer betätigten Joysticks. Beispielsweise kann ein Sensor die Stellung des Joysticks erfassen - betätigt der Fahrer den Joystick in einen Bremsbereich, kann je nach Stellung des Joysticks ein Ausgangssignal des dem Joystick zugeordneten Sensors genutzt werden zur Steuerung des pneumatischen Bremssteuerdrucks für den Anhänger, ggf. unter Zwischenschaltung des dann elektrisch gesteuerten Anhängersteuerventils.

Möglich ist, dass eine elektrische Schnittstelle zwischen Zugfahrzeug und Anhänger vorhanden ist. Wird diese genutzt, um ein Bremslichtsignal für einen Bremsvorgang zu dem Anhänger zu übertragen, damit eine Anhängerbremsleuchte bedarfsgerecht betätigt wird, wird üblicherweise das elektrische Bremslichtsignal in dem Zugfahrzeug unabhängig davon erzeugt, ob tatsächlich ein Anhänger angekuppelt ist oder nicht. Erfindungsgemäß kann die Steuereinheit mit Steuerlogik ausgestattet werden, welche in Abhängigkeit des von dem Sensor erzeugten Signals ein elektrisches Bremslichtsignal für den Anhänger erzeugt, so dass dieses ausschließlich erzeugt wird und eine elektrische Leistungsaufnahme erfolgt, wenn dieses Bremslichtsignal tatsächlich für einen angekuppelten Anhänger abgegriffen und genutzt werden kann.

In weiterer Ausgestaltung der Erfindung ist die Steuereinheit mit Steuerlogik ausgestattet, die eine Anhängersteuerung durchführt, was beispielsweise durch Wechselwirkung mit einem (auch) elektromagnetisch betätigten Anhängersteuerventil erfolgen kann. Hierbei erfolgt erfindungsgemäß die Anhängersteuerung in Abhängigkeit des von dem Sensor erzeugten Signals. Im einfachsten Fall besteht diese Abhängigkeit darin, dass je nach dem, ob der Anhänger angekuppelt ist oder nicht, das Anhängersteuerventil aktiviert oder deaktiviert werden kann. Durchaus denkbar ist aber auch, dass über das von dem Sensor erzeugte Signal eine Rückführung des ausgesteuerten Bremssteuerdrucks erfolgen kann, um eine Überwachung oder Regelung des Bremssteuerdrucks durchführen zu können.

In weiterer Ausgestaltung der Erfindung ist die Steuereinheit mit Steuerlogik ausgestattet, die eine Geschwindigkeitsbegrenzung in Abhängigkeit des von dem Sensor erzeugten Signals durchführt. Beispielsweise besteht hier die derartige Abhängigkeit darin, dass eine Geschwindigkeitsbegrenzung nur dann vorgenommen wird, wenn das Signal indiziert, dass ein Anhänger angekuppelt ist. Ebenfalls möglich ist, dass in diesem Fall eine auch ohne Anhänger vorhandene Geschwindigkeitsbegrenzung modifiziert wird auf eine kleinere Geschwindigkeit. Um lediglich ein Beispiel zu nennen, kann eine Geschwindigkeitsbegrenzung auf 25 km/h aktiviert werden, wenn erkannt wird, dass der Kupplungskopf mit einem Gegen-Kupplungskopf gekoppelt ist, also ein Anhänger an das Zugfahrzeug angekuppelt ist.

In weiterer Ausgestaltung der Erfindung ist die Steuereinheit mit Steuerlogik ausgestattet, welche eine Schaltstellung eines "Offroad"-Schalters des Zugfahrzeugs ermittelt. Die Steuereinheit nimmt eine automatische Modifikation einer Bremskraft des Anhängers und/oder des Zugfahrzeugs in Abhängigkeit von der Stellung des Offroad-Schalters und in Abhängigkeit des von dem Sensor erzeugten Signals vor. Möglich ist beispielsweise, dass eine automatische Betätigung der pneumatischen Bremsen des Anhängers nicht zulässig ist, wenn nicht vom Fahrer die Betriebsbremsen des Zugfahrzeugs betätigt werden. Dies gilt nur für den Betrieb im Straßenverkehr, während in einem Offroad-Modus durchaus der automatisierte Bremseingriff für den Anhänger erlaubt ist. In diesem Fall wird mittels der Steuereinheit zunächst detektiert, ob der Offroad-Schalter betätigt ist. Ist dies der Fall und ist somit auch der automatische Bremseingriff für den Anhänger erlaubt, kann beispielsweise bei einer Abbremsung des Zugfahrzeugs über den Joystick und einem Signal des Sensors, welches indiziert, dass der Anhänger angekuppelt ist, ein automatischer Bremseingriff an dem Anhänger erfolgen, beispielsweise durch geeignete elektrische Ansteuerung eines Anhängersteuerventils.

Möglich ist auch, dass die Steuereinheit mit einer Steuerlogik ausgestattet ist, welche in Abhängigkeit des von dem Sensor erzeugten Signals eine Streckbremsfunktion aktiviert. Diese hat das Ziel, eine etwaige Schubkraft des Anhängers auf das Zugfahrzeug zu vermeiden - vielmehr gewährleistet die Streckbremsfunktion, dass die Bremskraft des Anhängers so erhöht und/oder die Bremskraft des Zugfahrzeugs so verringert wird, dass die Beschleunigung des Anhängers ohne Kopplung mit dem Zugfahrzeug geringfügig kleiner wäre als die des Zugfahrzeugs. Damit wird in der mechanischen Kopplung zwischen Zugfahrzeug und Anhänger in jedem Fall eine Zugkraft erzeugt, die den Zug mit dem Zugfahrzeug und dem Anhänger gestreckt hält. Dies hat einen positiven Einfluss auf die Fahrstabilität des Zugs. Signalisiert hingegen das Signal des Sensors, dass kein Anhänger mit dem Zugfahrzeug gekoppelt ist, kann die Streckbremsfunktion deaktiviert sein, so dass an dem Zugfahrzeug die volle Bremskraft herbeigeführt wird und/oder keine irgendwie geartete pneumatische Bremskraft an dem Anhänger erzeugt wird oder diese verringert wird.

In weiterer Ausgestaltung der Erfindung ist die Steuereinheit mit Steuerlogik ausgestattet, welche in Abhängigkeit des von dem Sensor erzeugten Signals eine Abschätzung einer Kopplungskraft zwischen Zugfahrzeug und Anhänger vornimmt. Ausschließlich für den Fall, dass das von dem Sensor erzeugte Signal indiziert, dass ein Anhänger angekuppelt ist, kann ein geeigneter Algorithmus zur Abschätzung der Kopplungskraft ausgeführt werden. Um lediglich ein nicht beschränkendes Beispiel für einen Algorithmus zur Abschätzung der Kopplungskraft zu nennen, wird auf den Algorithmus gemäß DE 10 2009 031 851 A1 verwiesen, der auf einem Vergleich einer Soll-Motordrehzahl mit einer Ist-Motordrehzahl basiert.

In weiterer Ausgestaltung der Erfindung wird dann eine derart geschätzte Kopplungskraft erfindungsgemäß genutzt, um eine Beeinflussung einer Antriebsleistung, einer Bremskraft des Zugfahrzeugs, einer Bremskraft des Anhängers, einer Fahrstabilitätsregelung und/oder einer Fahrdynamikregelung des Zugfahrzeugs vorzunehmen. Im einfachsten Fall kann eine Beeinflussung dahingehend erfolgen, dass die geschätzte Kopplungskraft an eine vorbestimmte Kopplungskraft oder einen Kopplungskraftverlauf angepasst wird, beispielsweise auf eine verschwindende Kopplungskraft oder eine vorgegebene streckende Kopplungskraft.

Möglich ist, dass das Ventil, welches zwischen die Kupplungskopfleitung und die Zweigleitung zwischengeschaltet ist, ausschließlich zu der Steuerung der Druckbeaufschlagung der Zweigleitung dient, so dass ein weiteres Ventil vorhanden ist, welches zwischen die Kopplungskopfleitung und eine Ausgangsöffnung des Kupplungskopfes zwischengeschaltet ist. Für eine Weiterbildung der Erfindung ist allerdings das Ventil multifunktional ausgebildet, indem dieses sowohl die Druckbeaufschlagung der Zweigleitung steuert als auch zwischen die Kopplungskopfleitung und die Ausgangsöffnung zwischengeschaltet ist.

Eine weitere Lösung der der Erfindung zugrunde liegenden Aufgabe ist gegeben durch eine besondere Ausgestaltung eines pneumatischen Kupplungskopfes, der im Rahmen der Kopplung eines Zugfahrzeugs mit einem Anhänger Einsatz findet und somit dem Zugfahrzeug oder dem Anhänger zugeordnet sein kann. Hierbei kann es sich um einen Kupplungskopf Vorrat und/oder einen Kupplungskopf Bremse handeln, wobei auch möglich ist, dass es sich um einen kombinierten Kupplungskopf handeln kann. Ebenfalls möglich ist, dass es sich um einen Kupplungskopf handelt, wie dieser in der nicht vorveröffentlichten Patentanmeldung DE 10 2012 100 402.1 der Anmelderin beschireben ist, mittels dessen wahlweise die Kopplung zwischen Zugfahrzeug und Anhänger über pneumatische Anschlüsse einerseits und elektrische Anschlüsse über ein so genanntes EPI-Modul andererseits erfolgen kann.

In einen erfindungsgemäßen Kupplungskopf ist ein Ventil in beliebiger Bauart integriert, welches über einen Ventilkörper verfügt. Der Ventilkörper besitzt eine Schließstellung, in welcher der Kupplungskopf gegenüber der Umgebung abgeschlossen ist. Diese Schließstellung findet bevorzugt Einsatz, wenn der Kupplungskopf nicht mit einem Gegen-Kupplungskopf verbunden ist. In der Schließstellung unterbindet dann das Ventil einen unerwünschten Austritt von Druckluft aus der Kupplungskopfleitung in die Umgebung.

Darüber hinaus besitzt der Ventilkörper eine Öffnungsstellung, in welcher der Kupplungskopf pneumatisch mit einem Gegen-Kupplungskopf verbunden ist, womit insbesondere Druckluft von der Kupplungskopfleitung zu einem geeigneten Anschluss oder einer Leitung des Gegen-Kupplungskopfes übertreten kann, um beispielsweise einen Bremssteuerdruck und/oder einen Versorgungsdruck von dem Kupplungskopf an den Gegen-Kupplungskopf zu übertragen.

Erfindungsgemäß wird der Ventilkörper automatisch mit dem Kupplungsvorgang des Kupplungskopfes mit einem Gegen-Kupplungskopf von der Schließstellung in die Öffnungsstellung überführt (und von der Öffnungsstellung in die Schließstellung überführt, wenn das Entkuppeln des Kupplungskopfes von dem Gegen-Kupplungskopf erfolgt). Ein Sensor erfasst die Stellung des Ventilkörpers des in den Kupplungskopf integrierten Ventils, womit der Sensor letztendlich auch erfasst, ob der Kupplungskopf mit einem Gegen-Kupplungskopf gekoppelt ist.

Für eine Ausgestaltung dieses Grundgedankens ist der Sensor ein Wegsensor, der unmittelbar eine Stellung des Ventilkörpers erfasst. Ebenfalls möglich ist, dass der Wegsensor lediglich mittelbar eine Stellung des Ventilkörpers erfasst, indem der Wegsensor die Stellung eines weiteren Elements erfasst, dessen Stellung von der Stellung des Ventilkörpers abhängig ist.

In weiterer Ausgestaltung ist der Sensor ein Drucksensor, der lediglich mittelbar die Stellung des Ventilkörpers erfasst, indem der Drucksensor einen von der Stellung des Ventilkörpers abhängigen Druck erfasst.

In besonderer Ausgestaltung dieses Lösungsgedankens ist das Ventil zwischen eine Kupplungskopfleitung und eine Zweigleitung zwischengeschaltet. In der Schließstellung des Ventilkörpers ist die Kupplungskopfleitung pneumatisch von der Zweigleitung getrennt, wobei die Zweigleitung dann entlüftet ist. Hingegen ist in der Öffnungsstellung des Ventilkörpers die Kupplungskopfleitung pneumatisch mit der Zweigleitung verbunden. Die Druckdifferenz der in der Schließstellung entlüfteten Zweigleitung und der in der Öffnungsstellung mit dem Druck in der Kupplungskopfleitung beaufschlagten Zweigleitung kann dann zur Auswertung verwendet werden, ob der Kupplungskopf mit einem Gegen-Kupplungskopf gekoppelt ist. Hierzu erfasst der Drucksensor den Druck in der Zweigleitung.

Neben der Überwachung des Kopplungszustandes kann darüber hinaus das Drucksignal des Drucksensors in der Zweigleitung multifunktional genutzt werden, indem dieses für Kopplung des Kupplungskopfes mit dem Gegen-Kupplungskopf den Druck in der Versorgungsleitung und/oder der Bremssteuerleitung überwacht, sodass beispielsweise eine automatische Detektion eines Defekts wie einer Leckage in einer Versorgungs- oder Bremssteuerleitung erfolgen kann. Auch möglich ist, dass auf Basis des von dem Drucksensor erfassten Druckes eine Druckregelung beispielsweise des Bremssteuerdruckes für den Anhänger erfolgt.

Grundsätzlich umfasst die Erfindung auch einen Kupplungskopf in weiterem Sinne, in welchem der Sensor, insbesondere der Drucksensor, dezentral von dem Grundkörper des Kupplungskopfes angeordnet ist. In besonderer Ausgestaltung der Erfindung ist aber mit dem Kupplungskopf, dem Ventil und dem Sensor eine Baueinheit gebildet.

Der im Rahmen der Erfindung eingesetzte Sensor kann als analoger oder digitaler Sensor ausgebildet sein. Durchaus möglich ist auch, dass der Sensor im einfachsten Fall als Schalter ausgebildet ist, der nur zwei Schaltstellungen besitzt, wobei der Sensor eine erste Schaltstellung einnimmt, wenn der Kupplungskopf nicht mit dem Gegen-Kupplungskopf gekuppelt ist, und die zweite Schaltstellung einnimmt, wenn die Kupplung erfolgt ist. Somit kann der Schalter umschalten bei einem Schwellwert, welcher zuverlässig gewährleistet, dass die Kupplung erfolgt ist.

Erfindungsgemäß liegen in der Zweigleitung insbesondere zwei gänzlich unterschiedliche Druckzustände vor:
- In der Schließstellung des in den Kupplungskopf integrierten Ventils sind die Zweigleitung und die Kupplungskopfleitung voneinander getrennt. Somit erfasst der Sensor in diesem Schaltzustand des Ventils nicht den Druck in der Kupplungskopfleitung, sondern einen anderen Druck. Für das dargestellte Ausführungsbeispiel ist die Zweigleitung in diesem Schaltzustand entlüftet.
- Hingegen misst der Sensor mit dem Ankuppeln des Gegen-Kupplungskopfs und Überführung des Ventils in die Öffnungsstellung den Druck in der Kupplungskopfleitung, also einen qualitativ anderen Druck. Die Detektierung, ob somit das Ankuppeln erfolgt ist, ist erfindungsgemäß auf besonders einfache Weise ermöglicht. Unter Umständen kann sogar lediglich ein binärer Druckschalter verwendet werden, der zuverlässig detektiert, ob die Kupplung des Kupplungskopfs mit dem Gegen-Kupplungskopf erfolgt. Hierzu muss der Druckschalter (oder ein beliebiger anderer Drucksensor) lediglich einen Druckunterschied für die entlüftete Zweigleitung einerseits und für die aus der Kupplungskopfleitung druckbeaufschlagte Zweigleitung andererseits unterscheiden können.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einem schematischen Vertikalschnitt einen Kupplungskopf mit einem Ventil zwischen einer Kupplungskopfleitung und einer Zweigleitung.
- **Fig. 2**: zeigt eine Baueinheit mit einem Kupplungskopf gemäß Fig. 1 und zusätzlichem Sensor zur Erfassung des Drucks in der Zweigleitung.
- **Fig. 3 bis 7**: zeigen schematisch ein Zugfahrzeug mit einer hydraulischen Bremsanlage und einer pneumatischen Bremsanlage mit Anhängersteuerventil und Kupplungskopf gemäß Fig. 1.
- **Fig. 8**: zeigt in einem schematischen Vertikalschnitt einen Kupplungskopf mit einem Wegsensor, der eine Stellung eines Ventilkörpers eines Ventils erfasst.

### FIGURENBESCHREIBUNG

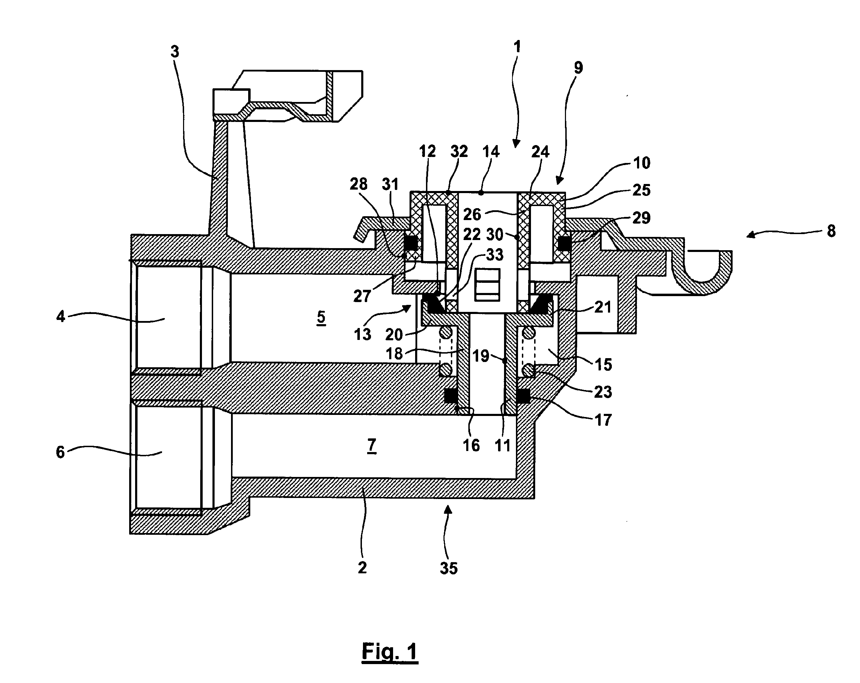

In **Fig. 1** ist ein Kupplungskopf 1 schematisiert dargestellt. Kupplungsköpfe sind an sich seit vielen Jahren aus vielfältigem Stand der Technik bekannt, vgl. beispielsweise AT 376619 B, DE 34 25 113 A1, DE 36 07 137 A1, DE 199 31 162 A1, DE 296 03 481 U1, DE 10 2009 036 619 A1 und WO 2011/042455 A1. Diese bekannten Ausgestaltungsformen besitzen ergänzende Funktionen wie beispielsweise einen integrierten Filter, welche ebenfalls in erfindungsgemäße Ausgestaltungen integriert sein können. In Fig. 1 ist die Darstellung auf Aspekte, welche im Zusammenhang mit der vorliegenden Erfindung stehen, reduziert. Während in den Figuren lediglich der dem Zugfahrzeug zugeordnete Kupplungskopf 1 dargestellt ist, nicht jedoch der dem Anhänger zugeordnete Gegen-Kupplungskopf, können den genannten Druckschriften auch Möglichkeiten für die Verbindung oder Kupplung des Kupplungskopfs 1 mit dem Gegen-Kupplungskopf entnommen werden.

Der Kupplungskopf 1 verfügt über einen Grundkörper 2, welcher über ein nicht näher dargestelltes Befestigungselement 3 an dem Zugfahrzeug befestigt ist. Der Kupplungskopf 1 verfügt über einen Anschluss 4 für eine sich im Inneren des Kupplungskopfs 1 erstreckende Kupplungskopfleitung 5 sowie einen Anschluss 6 für eine sich im Inneren des Kupplungskopfs 1 erstreckende Zweigleitung 7. Die Kupplungskopfleitung 5 und die Zweigleitung 7 sind insbesondere mit in Richtung der Fahrzeuglängsachse orientierten, in die Anschlüsse 4, 6 mündenden Sacklochbohrungen gebildet.

Der Kupplungskopf 1 verfügt über einen Verbindungsbereich 8, im Bereich dessen der Kupplungskopf 1 mechanisch mit dem Gegen-Kupplungskopf des Anhängers koppelbar ist. Vorzugsweise bilden der Verbindungsbereich 8 des Kupplungskopfs 1 und ein entsprechender Verbindungsbereich des Gegen-Kupplungskopfs des Anhängers eine Art Bajonett-Verbindung. Aus dem Verbindungsbereich 8 kragt nach oben ein Ventilkörper 9 aus, der aus Herstellungs- und Montagegründen mit zwei Ventilkörperteilen 10, 11 gebildet ist. Ein von dem Grundkörper 2 ausgebildeter Ventilsitz 12 bildet mit dem Ventilkörper 9 ein Ventil 13 aus. In der in Fig. 1 wirksamen Schließstellung sperrt das Ventil 13 sowohl die Verbindung der Kupplungskopfleitung 5 mit der Zweigleitung 7 als auch die Verbindung der Kupplungskopfleitung 5 mit einer Ausgangsöffnung 14 des Kupplungskopfs 1, über welche die Druckluft aus der Kupplungskopfleitung 5 für angekuppelten Gegen-Kupplungskopf an den Anhänger übergeben wird. Die Zweigleitung 7 ist unabhängig von der Ventilstellung des Ventils 13 ständig mit der Ausgangsöffnung 14 des Kupplungskopfs 1 verbunden. In der in Fig. 1 wirksamen Schließstellung des Kupplungskopfs 1, in dem dieser nicht mit dem Gegen-Kupplungskopf gekuppelt ist, ist die Zweigleitung 7 somit über die Ausgangsöffnung 14 entlüftet.

Die Kupplungskopfleitung 5 mündet in einen Kupplungskopfraum 15. Dieser ist über eine Führungsbohrung 16 mit der Zweigleitung 7 verbunden. In der Führungsbohrung 16 ist das Ventilkörperteil 11 axial in eine vertikale Richtung gleitend geführt, wobei eine pneumatische Abdichtung über ein Dichtelement 17, hier einen Dichtring, erfolgt, welches zwischen einer Mantelfläche des Ventilkörperteils 11 und der Führungsbohrung 16 wirkt. Das Ventilkörperteil 11 ist in erster Näherung in dem dargestellten Längsschnitt T-förmig ausgebildet mit einem Vertikalschenkel 18, welcher eine Durchgangsbohrung 19 besitzt, und einem Horizontalschenkel 20, welcher von der Durchgangsbohrung 19 durchsetzt ist und radial außenliegend an einem umlaufenden Bund 21 eine Ventildichtung 22 trägt. Über eine Druckfeder 23, deren einer Federfußpunkt sich an einem Boden des Kupplungskopfraums 15 abstützt und dessen anderer Federfußpunkt sich auf der Unterseite des Horizontalschenkels 20 abstützt, werden das Ventilkörperteil 11 und die Ventildichtung 22 in der Schließstellung des Ventils 13 gegen den von dem Grundkörper 2 ausgebildeten Ventilsitz 12 gepresst.

Das Ventilkörperteil 10 ist in einem Halblängsschnitt in grober Näherung in Form eines umgekehrten U ausgebildet mit einem horizontalen Grundschenkel 24 und zwei parallelen vertikalen Seitenschenkeln 25, 26. Hierbei ist der radial innenliegende Seitenschenkel 26 länger ausgebildet als der radial außenliegende Seitenschenkel 25. Die dem Grundschenkel 24 abgewandte Stirnseite des Seitenschenkels 26 stützt sich radial innenliegend von der Ventildichtung 22 an der Oberseite des Horizontalschenkels 20 des Ventilkörperteils 11 ab. Der radial außenliegende Seitenschenkel 25 besitzt in dem dem Grundschenkel 24 abgewandten Endbereich eine Verdickung 27, im Bereich welcher das Ventilkörperteil 10 in einer Führungsbohrung 28 des Grundkörpers 2 geführt ist und über ein Dichtelement 29, hier einen Dichtring, abgedichtet ist. Der umlaufende Seitenschenkel 26 begrenzt radial innenliegend eine Durchgangsbohrung 30, welche in die Durchgangsbohrung 19 mündet, wodurch die ständige Verbindung der Ausgangsöffnung 14 mit der Zweigleitung 7 gewährleistet ist. In der in Fig. 1 dargestellten Schließstellung liegt die Verdickung 27 an einem radial nach innen vorspringenden Absatz 31 der Führungsbohrung 28 an. Eine Doppelpassung infolge der Anlage der Verdickung 27 an den Absatz 31 einerseits und der Schließstellung des Ventils 13 andererseits ist vermieden durch die Elastizität der Ventildichtung 22.

Die Funktion des Kupplungskopfs ist wie folgt:
a) In dem in Fig. 1 dargestellten nicht gekuppelten Zustand kragt der Ventilkörper 9 wie dargestellt nach oben aus dem Kupplungskopf 1 heraus. Die Verdickung 27 liegt an dem Absatz 31 an. Über die Druckfeder 23 wird der Ventilkörper 9 mit der Ventildichtung 22 gegen den Ventilsitz 12 gepresst, so dass das Ventil 13 geschlossen ist.
b) Erfolgt eine Montage eines Gegen-Kupplungskopfs mit dem Kupplungskopf 1, kommt ein Gegen-Kontaktelement des Gegen-Kupplungskopfs zur Anlage an eine Kontaktfläche 32, die von der Oberseite des Grundschenkels 24 des Ventilkörperteils 10 ausgebildet ist. Beispielsweise mit Schließen der Bajonett-Verbindung zwischen dem Kupplungskopf 1 und dem Gegen-Kupplungskopf wird über eine Kontaktkraft in der Kontaktfläche 32 der Ventilkörper 9 nach unten gedrückt, womit sich der Ventilkörper 9 mit den beiden Ventilkörperteilen 10, 11 nach unten bewegt. Somit entfernt sich die Verdickung 27 von dem Absatz 31. Gleichzeitig löst sich die Ventildichtung 22 von dem Ventilsitz 12, bis das Ventil 13 geöffnet ist. In dieser Öffnungsstellung kann Druckluft von dem Anschluss 4 über die Kupplungskopfleitung 5 und das geöffnete Ventil 13 über eine radial orientierte Durchgangsausnehmung 33 des Ventilkörperteils 10 in die Durchgangsbohrung 30 übertreten, so dass die Druckluft einerseits in die Zweigleitung 7 und andererseits zu der Ausgangsöffnung 14 gelangen kann, von wo diese dann zu dem Gegen-Kupplungskopf und letztendlich der Druckluftanlage des Anhängers übertreten kann.

Das Ventil 13 ist somit für die erfindungsgemäße Ausgestaltung multifunktional, in dem dieses einerseits den Übertritt von Druckluft von dem Anschluss 4 und der Kupplungskopfleitung 5 zu der Ausgangsöffnung 14 nur ermöglicht, wenn an dem Kupplungskopf 1 ein Gegen-Kupplungskopf angeschlossen ist, und andererseits nur für dieselbe Bedingung eine pneumatische Verbindung zwischen der Kupplungskopfleitung 5 und der Zweigleitung 7 schafft. Der Druck in der Zweigleitung 7 und an dem Anschluss 6 indiziert somit, ob an dem Kupplungskopf 1 ein Gegen-Kupplungskopf angeschlossen ist: Ist an dem Kupplungskopf 1 kein Gegen-Kupplungskopf angeschlossen, ist die Zweigleitung 7 gemäß Fig. 1 entlüftet. Ist hingegen an dem Kupplungskopf 1 ein Gegen-Kupplungskopf angeschlossen, entspricht der Druck in der Zweigleitung 7 dem Druck in der Kupplungskopfleitung 5, also beispielsweise einem Druck in einem Vorratsbehälter des Zugfahrzeugs.

Möglich ist, dass an dem Anschluss 6 über eine Leitung beliebiger Länge und an beliebigem Ort in dem Zugfahrzeug ein Sensor 34 angeschlossen ist, um den Druck in der Zweigleitung 7 zu erfassen. In diesem Fall bildet der Kupplungskopf 1 mit dem Ventil 13 eine Baueinheit 35, die räumlich beabstandet zu dem Sensor 34 angeordnet ist.

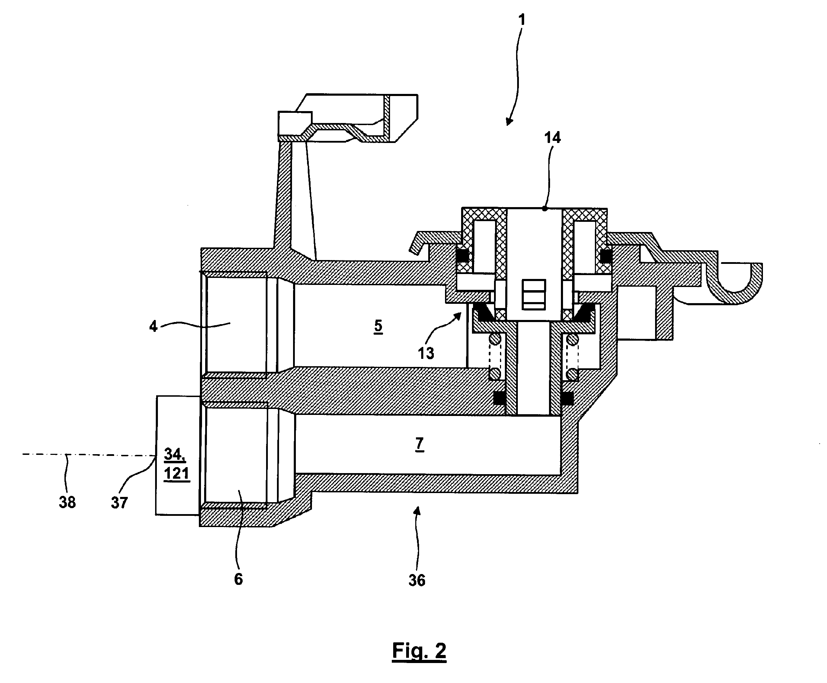

**Fig. 2** zeigt eine andere Ausführungsform der Erfindung, bei welcher der Sensor 34 in den Anschluss 6 eingeschraubt ist. In diesem Fall ist mit dem Kupplungskopf 1 und dem Ventil 13 sowie dem Sensor 34 eine Baueinheit 36 gebildet. Diese kommuniziert für angeschlossenen Gegen-Kupplungskopf über die Ausgangsöffnung 14 mit der Druckluftanlage des Anhängers und verfügt neben der Ausgangsöffnung 14 und dem Anschluss 4 ausschließlich über eine elektrische Schnittstelle 37, hier mit einer angeschlossenen elektrischen Signalleitung 38, über welche das Ausgangssignal des Sensors 34 an andere Bauelemente des Zugfahrzeugs, insbesondere eine Steuereinheit 39 übertragen werden kann. Wie durch einen Vergleich der Figuren 1 und 2 zu erkennen ist, kann derselbe Kupplungskopf 1 in einer Einbauumgebung eingesetzt werden, bei der an dem Anschluss 6 eine pneumatische Leitung angeschlossen ist, über welche die Zweigleitung 7 mit einem entfernt angeordneten Sensor 34 pneumatisch verbunden ist, während in einer anderen Einbauumgebung in den Anschluss 6 der Sensor 34 eingeschraubt ist, so dass die Baueinheit 36 hier nur über ein elektrisches Ausgangssignal über die elektrische Signalleitung 38 mit den anderen Bauelementen kommuniziert.

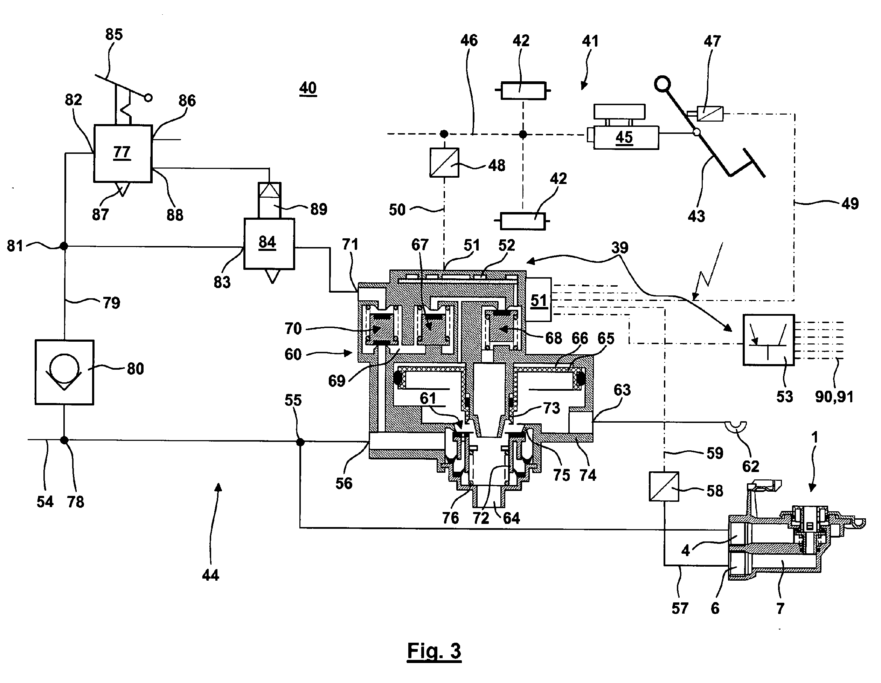

**Fig. 3** zeigt schematisch die relevanten Teile eines landwirtschaftlichen Zugfahrzeugs 40 mit einer hydraulischen Bremsanlage 41, welche der Betätigung von hydraulischen Betriebsbremsen 42 nach Maßgabe der Betätigung eines Bremspedals 43 dient, und einer pneumatischen Bremsanlage 44, die der Versorgung und Steuerung der pneumatischen Bremsanlage eines optional mit dem Zugfahrzeug 40 koppelbaren Anhängers dient.

In der hydraulischen Bremsanlage 41 wird eine Betätigung des Bremspedals 43 durch einen Hauptzylinder 45, ggf. mit Bremskraftverstärker, umgewandelt in einen hydraulischen Bremsdruck, welcher über die gestrichelt dargestellten hydraulischen Leitungen 46 den Betriebsbremsen 42 zugeführt wird. Die Betätigung des Bremspedals 43, insbesondere der Betätigungsweg oder ein Betätigungswinkel, wird über einen Sensor 47 erfasst. Darüber hinaus wird der hydraulische Bremsdruck in einer Leitung 46 über einen Sensor 48 erfasst. Die Ausgangssignale der Sensoren 47, 48 werden über die strichpunktiert dargestellten elektrischen Signalleitungen 49, 50 über geeignete Schnittstellen 51 Steuereinheitmodulen 52, 53 zugeführt, durch welche die Signale verarbeitet werden.

Die pneumatische Bremsanlage 44 wird über eine Versorgungsleitung 54 auf nicht näher dargestellte Weise, beispielsweise aus einem Kompressor mit nachgeordnetem Lufttrockner und Vorratsbehälter, mit Druckluft versorgt. Die Versorgungsleitung 54 wird über eine Verzweigung 55 sowohl dem Anschluss 4 des Kupplungskopfs 1 als auch einem Versorgungsanschluss 56 eines Anhängersteuerventils 60 zugeführt. Hinsichtlich der weiteren Ausgestaltung des Kupplungskopfs 1, welcher hier als Kupplungskopf Vorrat eingesetzt ist, wird auf die ausführliche Beschreibung zu Fig. 1 verwiesen. Der Anschluss 6 des Kupplungskopfs 1 ist über eine extern von dem Kupplungskopf 1 verlaufende Leitung 57 mit einem beabstandet von dem Kupplungskopf 1 angeordneten Sensor 58 verbunden, welcher den Druck in der Zweigleitung 7 erfasst. Das Ausgangssignal des Sensors 58 wird über eine elektrische Signalleitung 59 und die Schnittstelle 51 den Steuereinheitmodulen 52, 53 zur weiteren Verarbeitung zugeführt.

Das Anhängersteuerventil 60 verfügt über ein Ein-/Auslassventil 61, über welches ein mit einem Kupplungskopf Bremse 62 verbundener Bremssteuerdruckanschluss 63 mit einer Entlüftung 64 zur Verringerung des Bremssteuerdrucks an dem Kupplungskopf Bremse 62 verbindbar ist, mit dem Versorgungsanschluss 56 zur Erhöhung des Bremssteuerdrucks an dem Kupplungskopf Bremse 62 verbindbar ist und absperrbar ist zum Konstanthalten des Drucks an dem Kupplungskopf Bremse 62. Die Steuerung des Ein-/Auslassventils 61 erfolgt über einen Wiegekolben 65, an dessen Unterseite der Druck an dem Kupplungskopf Bremse 62 ansteht, während die Oberseite des Wiegekolbens 65 einen Steuerraum 66 begrenzt, so dass auf den Wiegekolben 65 ein Steuerdruck des Steuerraums 66 einwirkt.

Die Steuerung des Steuerdrucks in dem Steuerraum 66 erfolgt mit zwei Magnetventilen 67, 68, die hier als 2/2-Wege-Magnetventile ausgebildet sind. Das Magnetventil 68 verbindet in seiner bestromten Stellung den Steuerraum 66 mit der Entlüftung 64, während dieses in nicht bestromten Zustand infolge der Beaufschlagung durch eine Feder die Verbindung des Steuerraums 66 mit der Entlüftung 64 absperrt. Das Magnetventil 67 verbindet in der nicht bestromten Stellung den Steuerraum 66 mit einer Zentralleitung 69 infolge der Beaufschlagung durch eine Feder, während mit Bestromung das Magnetventil 67 die Verbindung zwischen dem Steuerraum 66 und der Zentralleitung 69 absperrt. Die Zentralleitung 69 ist über ein weiteres Magnetventil 70 mit dem Versorgungsanschluss 56 verbindbar. Für das dargestellte Ausführungsbeispiel ist das Magnetventil 70 als 3/2-Wegeventil ausgebildet, welches in der bestromten Stellung die Zentralleitung 69 mit dem Versorgungsanschluss 56 verbindet, während eine Verbindung der Zentralleitung 69 mit einem Handbremsanschluss 71 abgesperrt ist. Ohne Bestromung des Magnetventils 70 verbindet dieses infolge der Beaufschlagung durch eine Feder die Zentralleitung 69 mit dem Handbremsanschluss 71, während die Verbindung der Zentralleitung 69 mit dem Versorgungsanschluss 56 abgesperrt ist.

Das Ein-/Auslassventil 61 verfügt über einen verschieblich in dem Anhängersteuerventil 60 geführten Ventilkörper 72, der mit einem von dem Wiegekolben 65 ausgebildeten Ventilsitz 73 einerseits und einem von einem Gehäuse 74 gebildeten Ventilsitz 75 andererseits wie folgt zusammenwirkt:
- In der Betriebsstellung gemäß Fig. 3 überwiegt die Kraft infolge des Drucks an dem Kupplungskopf Bremse 62 auf der Unterseite des Wiegekolbens 65 gegenüber der Kraft infolge des Drucks in dem Steuerraum 66, so dass sich der Wiegekolben 65 in seiner obersten Position befindet, womit eine Entlüftungsstellung gebildet ist. In dieser Entlüftungsstellung bildet sich zwischen dem Ventilsitz 73 und dem Ventilkörper 72 ein Entlüftungs-Ringspalt aus. Infolge der Beaufschlagung durch eine Druckfeder 76 wird der Ventilkörper 72 an den Ventilsitz 75 gepresst, womit ein Übertritt von Druckluft von dem Versorgungsanschluss 56 zu der Entlüftung 64 und zu dem Bremssteuerdruckanschluss 63 abgesperrt ist.
- Mit Druckbeaufschlagung des Steuerraums 66 bewegt sich der Wiegekolben 65 nach unten, bis der Ventilsitz 73 zur Anlage an den Ventilkörper 72 kommt, womit eine Sperrstellung des Ein-/Auslassventils 61 eingenommen ist, in welcher die Verbindungen zwischen dem Versorgungsanschluss 56, dem Bremssteuerdruckanschluss 63 und der Entlüftung 64 abgesperrt sind.
- Ist der Druck in dem Steuerraum 66 groß genug, um den Wiegekolben 65 von dieser Sperrstellung weiter nach unten zu bewegen, drückt der Wiegekolben 65 über den Kontakt zwischen Ventilsitz 73 und Ventilkörper 72 den Ventilkörper gegen die Beaufschlagung durch die Druckfeder 76 weiter nach unten, womit zwischen dem Ventilsitz 75 und dem Ventilkörper 72 ein Belüftungs-Ringspalt gebildet wird. Durch diesen Belüftungs-Ringspalt kann Druckluft von dem Versorgungsanschluss 56 zu dem Bremssteuerdruckanschluss 63 und zu dem Kupplungskopf Bremse 62 übertreten. Mit zunehmenden Druckaufbau an dem Kupplungskopf Bremse 62 steigt auch der Druck, der auf der Unterseite auf den Wiegekolben 65 wirkt. Mit hinreichendem Druckanstieg auf der Unterseite des Wiegekolbens 65 kann dieser wieder nach oben bewegt werden in die Sperrstellung und, je nach Druckluftbeaufschlagung des Steuerraums 66 auch wieder in die Entlüftungsstellung.

Je nach Ansteuerung der Magnetventile 67, 68, 70 kann eine gezielte Be- und Entlüftung des Steuerraums 66 erfolgen, womit letztendlich der Bremssteuerdruck an dem Kupplungskopf Bremse 62 vorgegeben werden kann. Werden beide Magnetventile 67, 68 in ihre Sperrstellung überführt, kann des Weiteren der Druck in dem Steuerraum 66 konstant gehalten werden.

In der in Fig. 3 nicht wirksamen Betriebsstellung verbindet das Magnetventil 70 die Zentralleitung 69 mit dem Versorgungsanschluss 56. Soll eine Erzeugung eines Bremssteuerdrucks an dem Kupplungskopf Bremse 62 über ein Handbremsventil 77, hier in Ausbildung als Drehschieberventil, erfolgen, wird das Magnetventil 70 nicht bestromt und in die andere Betriebsstellung umgeschaltet, was auch automatisch erfolgt bei Einbruch der elektrischen Leistungsversorgung. In diesem Fall wird für das Magnetventil 67 in der Belüftungsstellung, die gemäß Fig. 3 auch eingenommen wird bei Einbruch der elektrischen Leistungsversorgung, die Zentralleitung 69 und der Steuerraum 66 mit dem Handbremsanschluss 71 verbunden, so dass letztendlich der Druck in dem Steuerraum 66, die Betriebsstellung des Wiegekolbens 65 und der Bremssteuerdruck an dem Kupplungskopf Bremse 62 über das Handbremsventil 77 gesteuert werden können. Für das in Fig. 3 dargestellte Ausführungsbeispiel erfolgt über eine Verzweigung 78 der Versorgungsleitung 54 mit einer Leitung 79 mit darin integriertem Rückschlagventil 80, welches einen Druckluftstrom von der Versorgungsleitung 54 ermöglicht, aber in entgegengesetzte Richtung absperrt, sowie eine weitere Verzweigung 81 eine Versorgung eines Eingangsanschlusses 82 des Handbremsventils 77 und eines Eingangsanschlusses 83 eines Relaisventils 84 mit Druckluft. Je nach Stellung eines Betätigungsorgans 85, hier eines Wählhebels, verbindet das Handbremsventil 77 einen Parkbremsanschluss 86 des Handbremsventils 77 wahlweise mit einer Entlüftung 87 oder dem Eingangsanschluss 82, womit eine Beund Entlüftung von Federspeicher-Feststellbremsen des Zugfahrzeugs je nach Stellung des Betätigungsorgans 85 erfolgen kann. Das Handbremsventil 77 verfügt darüber hinaus über einen Steuerausgang 88, welcher mit einem (gemäß Fig. 3 u. U. invertierten) Steueranschluss 89 des Relaisventils 84 verbunden ist. Über das Handbremsventil 77 kann je nach Stellung des Betätigungsorgans 85 der Steueranschluss 89 be- und entlüftet werden durch selektive Verbindung des Steuerausgangs 88 mit der Entlüftung 87 oder dem Eingangsanschluss 82. Unter Nutzung der Relaiswirkung des Relaisventils 84 kann nach Maßgabe des Drucks an dem Steueranschluss 89, also je nach Stellung des Handbetätigungsorgans, der Druck an dem Handbremsanschluss 71 modifiziert werden, welcher in unbestromten Zustand der Magnetventile 67, 68, 70 den Druck an dem Kupplungskopf Bremse 62 vorgibt.

Bei dem Steuereinheitmodul 53 handelt es sich vorzugsweise um ein Steuereinheitmodul, welches für ein Motormanagement zuständig ist. Das Steuereinheitmodul 53 kann mit weiteren Steuereinheitmodulen (nicht dargestellt) über uni- oder bidirektionale Signalleitungen 90 oder einen CAN-Bus 91 kommunizieren.

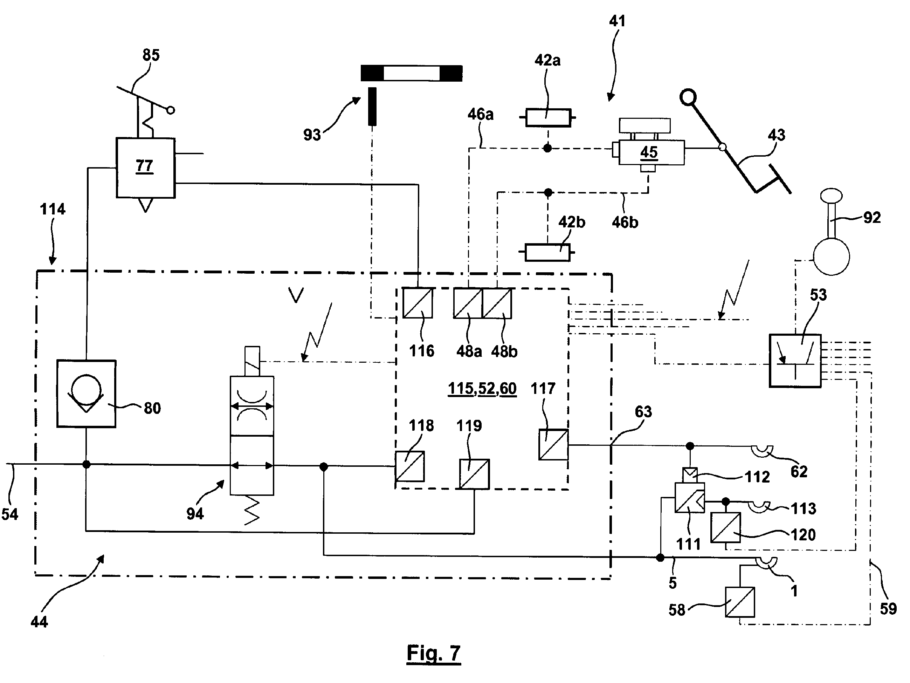

Wird über den Sensor 58 eine Druckbeaufschlagung der Zweigleitung 7 des Kupplungskopfs 1 erfasst, kann dies durch die Steuereinheitmodule 52, 53 dahingehend ausgewertet werden, dass an dem Kupplungskopf 1 ein Gegen-Kupplungskopf des Anhängers angekuppelt ist. Erkennt beispielsweise das Steuereinheitmodul 53, dass eine Betätigung eines Joysticks 92 durch den Fahrer derart erfolgt, dass eine Abbremsung des Zugfahrzeugs 40 ohne Betätigung der Betriebsbremsen erfolgt, können die Steuereinheitmodule 52, 53 das Anhängersteuerventil 60 durch elektrische Ansteuerung der Magnetventile 67, 68, 70 so steuern, dass ein geeigneter Bremssteuerdruck an dem Kupplungskopf Bremse 62 erzeugt wird, der eine Bremswirkung des Anhängers zur Folge hat, welche der an dem Zugfahrzeug 40 herbeigeführten Bremswirkung durch Vorgabe durch den Joystick 92 entspricht oder von dieser abhängt. Möglich ist auch, dass die Steuereinheitmodule 52, 53 mit Erkennen durch den Kupplungskopf 1 mit Sensor 58, dass ein Anhänger angekuppelt ist, Parameter für eine "Solofahrt" oder "Anhängerfahrt" gezielt auswählen und geeignete Maßnahmen für eine Stabilitätsregelung, eine Rückwärtsfahrt, eine Kreisfahrt, eine Geschwindigkeitsregelung, zur Erzeugung eines Anhänger-Bremssignals, eine Aktivierung der Tätigkeit des Anhängersteuerventils u. ä. einleiten oder eine Anpassung von Betriebsparametem vornehmen. Ebenfalls möglich ist, dass für den Fall, dass an dem Zugfahrzeug ein Bremssignal erzeugt wird (durch die Betriebsbremse entsprechend der Betätigung des Bremspedals 43 oder durch eine Feststellbremse entsprechend der Betätigung des Handbremsventils 77), bei angekuppelten Anhänger ein Bremssteuerdruck durch das Anhängersteuerventil 60 ausgesteuert wird, während das Anhängersteuerventil 60 ohne Anhänger nicht aktiviert wird, womit eine elektrische Leistungsaufnahme reduziert wird. Möglich ist weiterhin, dass über den Joystick 92 eine Ansteuerung der Antriebsmaschine des Zugfahrzeugs 40 und/oder eines Getriebes erfolgt, so dass sich ein gewünschtes, über den Joystick 92 vorgegebenes Bewegungsverhalten des Zugfahrzeugs ergibt. So kann beispielsweise eine Abbremsung durch Veränderung der Getriebeübersetzung und damit das Betreiben der Antriebsmaschine in einem Schubbetrieb erfolgen. Möglich ist, dass bei Erkennen über den Kupplungskopf 1 mit Sensor 58, dass ein Anhänger angekuppelt ist, das Steuereinheitmodul 53 für das Motormanagement eine Höchstgeschwindigkeit vorgibt oder anpasst. Dies ist insbesondere von Bedeutung, wenn sich das Zugfahrzeug 40 mit Anhänger hangabwärts bewegt, was über einen entsprechenden Neigungssensor erkannt werden kann, dessen Signal ebenfalls dem Steuereinheitmodul 53 zugeführt werden kann. Ein automatisierter Bremseingriff wird auch ohne Betätigung der Betriebsbremsen 42 oder Feststellbremsen des Zugfahrzeugs 40 insbesondere dann vorgenommen, wenn dem Steuereinheitmodul 53 das Signal eines Offroad-Schalters vorliegt, gemäß welchem der Benutzer (im Gegensatz zu einem Straßenbetriebs-Modus) einen Offroad-Modus aktiviert hat. In diesem Fall kann dann bei dem Erkennen eines kritischen Fahrzustands, insbesondere bei einer vorgegebenen Neigung und einer Schwellwert-Geschwindigkeit, automatisch eine Abbremsung des Zugfahrzeugs und/oder des Anhängers erzeugt werden, was mit einer Ansteuerung des Anhängersteuerventils 60 über die Steuereinheitmodule 52, 53 erfolgen kann. Des Weiteren kann eine Fahrstabilisierung des Zugs aus dem Zugfahrzeug 40 und dem Anhänger erfolgen, wenn ein instabiler Fahrzustand erkannt wird und über den Kupplungskopf 1 mit Sensor 58 ein Signal vorliegt, welches indiziert, dass ein Anhänger angekoppelt ist. In diesem Fall kann beispielsweise eine Streckbremsfunktion automatisch aktiviert werden, bei der über die Steuereinheitmodule 52, 53 das Anhängersteuerventil 60 so angesteuert wird, dass ein Bremssteuerdruck an dem Kupplungskopf Bremse 62 erzeugt wird, welcher das Vorliegen einer Kopplungs-Zugkraft in der mechanischen Kopplung zwischen Anhänger und Zugfahrzeug 40 gewährleistet. Des Weiteren möglich ist, dass ein Auflaufen des Anhängers automatisiert durch die Steuereinheitmodule 52, 53 erkannt wird. Haben die Steuereinheitmodule 52, 53 auf Grundlage des Signals des Sensors 58 erkannt, dass ein Anhänger angekoppelt ist, und werden an den Fahrzeugrädern Beschleunigungszustände detektiert, welche nicht auf das Antriebsmoment des Antriebsaggregats des Antriebsstrangs des Zugfahrzeugs 40 zurückzuführen sind, sondern vielmehr auf ein "Schieben" des Anhängers zurückzuführen sind, können geeignete Maßnahmen ergriffen werden. Diese Maßnahmen bestehen beispielsweise in der Erzeugung eines "zusätzlichen" Bremssteuerdrucks für den Anhänger. Entsprechendes gilt natürlich auch für Beschleunigungszustände des Zugfahrzeugs - folgt das Zugfahrzeug 40 der vorgegebenen Beschleunigung nicht wie gewünscht, lässt dies auf eine mangelnde Beschleunigung oder vorhandene Bremskraft des Anhängers schließen. Mit dem Erkennen einer Rückwärtsfahrt und angekoppelten Anhänger kann eine Geschwindigkeitsbegrenzung erfolgen. Bei einer Kreisfahrt kann ebenfalls eine Geschwindigkeitsbegrenzung erfolgen, wenn ein Anhänger angekoppelt ist. Einsatz finden kann eine Streckbrems-Funktion insbesondere während einer Kurven- oder Kreisfahrt. Möglich ist, dass das Steuereinheitmodul 53 zusammenwirkt mit einer ABS-Regelung und mindestens einem Drehzahlsensor eines Fahrzeugrads, um eine Fahrdynamikregelung durchzuführen und zu erkennen, ob das Zugfahrzeug 40 von dem Anhänger geschoben oder abgebremst wird. Hierzu finden insbesondere Raddrehzahlsensoren 93 Einsatz, die in Fig. 7 dargestellt sind. Die Steuereinheitmodule 52, 53 bilden eine hier verteilt angeordnete Steuereinheit 39.

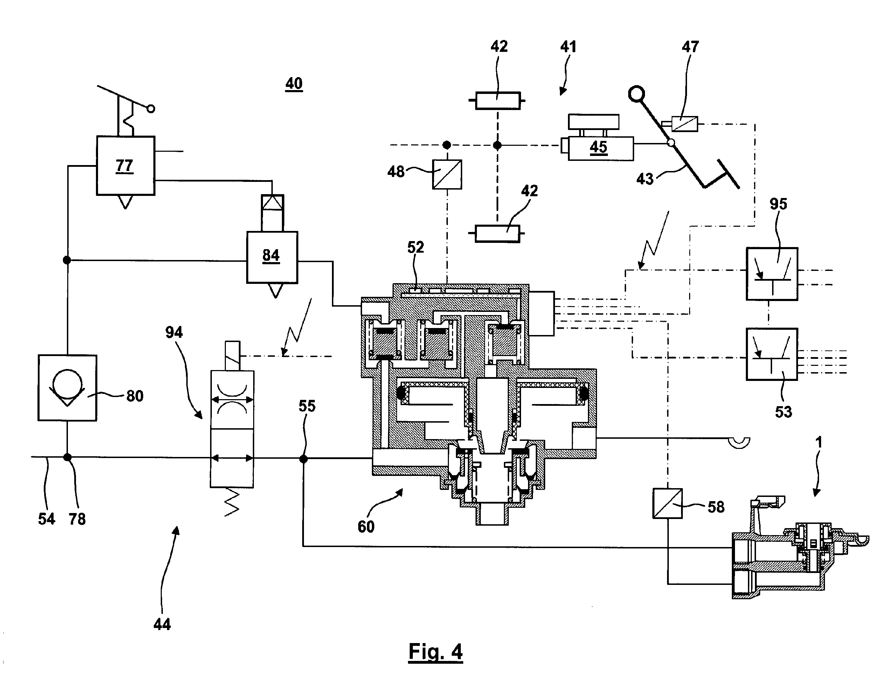

Bei ansonsten Fig. 3 entsprechender Ausgestaltung ist gemäß Fig. 4 in der Versorgungsleitung 54 zwischen den Verzweigungen 78, 55 ein 2/2-Wege-Magnetventil 94 angeordnet, welches ohne Bestromung in der Betriebsstellung gemäß Fig. 4 eine Durchlassstellung einnimmt, während dieses mit Bestromung entgegen der Beaufschlagung durch eine Feder eine gedrosselte Durchlassstellung einnimmt. Wird ein Abriss eines Kupplungskopfs 1, 62 erkannt, wird das 2/2-Wege-Magnetventil 94 in seine Drosselstellung überführt, um den Druckluftverbrauch zu reduzieren. Der Abriss des Kupplungskopfs Vorrat 1 (oder eine Leckage in einer zugeordneten Vorratsleitung) kann erkannt werden durch einen Druckabfall an dem Sensor 58. Erkennt ein Steuereinheitmodul 52, 53 einen derartigen Druckabfall auf Grundlage des Messsignals des Sensors 58, kann das Steuereinheitmodul 52, 53 das 2/2-Wege-Magnetventil 94 in die Drosselstellung überführen. In das Anhängersteuerventil 60 kann auf nicht dargestellte Weise ebenfalls ein Drucksensor integriert sein, welcher den Bremssteuerdruck an dem Kupplungskopf Bremse 62 erfasst. Detektiert ein derartiger Sensor einen Bremssteuerdruck, welcher nicht dem Bremssteuerdruckverlauf entsprechend der Vorgabe durch die Ansteuerung der Magnetventile 67, 68, 70 entspricht, kann darauf geschlossen werden, dass eine Leckage oder ein Abriss des Kupplungskopfs Bremse 62 oder der zugeordneten Bremssteuerdruckleitungen aufgetreten ist und das 2/2-Wege-Magnetventil 94 in seine Drosselstellung überführt werden. Es versteht sich, dass der Drucksensor 58 auch in das Anhängersteuerventil 60 integriert sein kann, in den Kupplungskopf 1 integriert sein kann, wie dies in Fig. 2 dargestellt ist und/oder ein Sensor für die Erfassung des Bremssteuerdrucks außerhalb des Anhängersteuerventils 60 angeordnet sein kann.

In Fig. 4 ist neben dem Steuereinheitmodul 53, welches (u. a. für ein Motormanagement zuständig ist,) ein Steuereinheitmodul 95 dargestellt, welches für das Getriebemanagement zuständig ist und in Signalaustausch mit dem Steuereinheitmodul 53 (und dem Steuereinheitmodul 52) steht. Wie oben erläutert kann bei Veränderung der Getriebeübersetzung mittels des Steuereinheitmoduls 95 ein entsprechender Bremssteuerdruck über das Anhängersteuerventil 60 erzeugt werden.

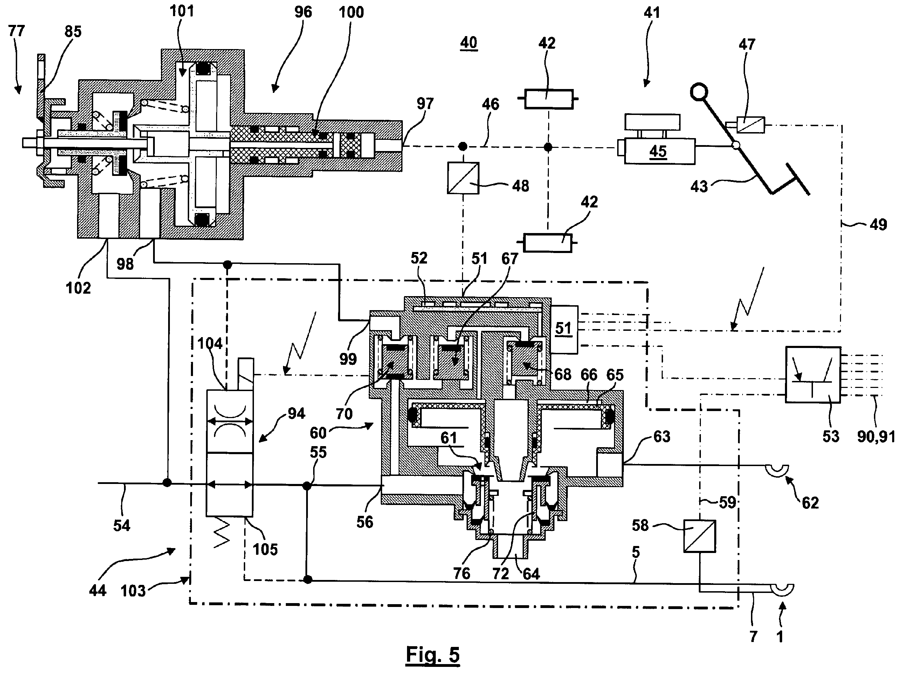

Während gemäß dem Ausführungsbeispiel gemäß Fig. 3 und 4 der Bremssteuerdruck an dem Kupplungskopf Bremse 62 entsprechend der Betätigung des Bremspedals 43 ausschließlich elektrisch über die Ansteuerung der Magnetventile 67, 68, 70 modifiziert, gesteuert oder geregelt wird, kann für das Ausführungsbeispiel gemäß Fig. 5 eine Vorgabe des Bremssteuerdrucks alternativ über die elektrische Ansteuerung des Anhängersteuerventils 60 mittels der Steuereinheitmodule 52, 53 und über ein zusätzliches Anhängersteuerventil 96 erfolgen, welches für das dargestellte Ausführungsbeispiel hydraulisch-pneumatisch arbeitet. Hierzu verfügt das Anhängersteuerventil 96 über einen hydraulischen Eingangsanschluss 97, welcher an die hydraulische Leitung 46 angeschlossen ist. Des Weiteren besitzt das Anhängersteuerventil 96 einen Versorgungsanschluss 102, welcher aus der Versorgungsleitung 54 mit Druckluft versorgt wird. Schließlich besitzt das Anhängersteuerventil 96 einen Bremssteuerdruckanschluss 98, der mit einem Eingangsanschluss 99 des Anhängersteuerventils 60 verbunden ist, wobei der Eingangsanschluss 99 dem Handbremsanschluss 71 gemäß dem Ausführungsbeispiel in Fig. 3 entspricht. Das Anhängersteuerventil 96 verfügt über einen hydraulisch beaufschlagten Stellkolben 100, welcher einwirkt auf einen Wiegekolben 101, dessen Betriebsstellung wiederum die Ventilstellung eines Ein-/Auslassventils 101 steuert. Letztendlich erzeugt das Anhängersteuerventil 96 einen Bremssteuerdruck an dem Bremssteuerdruckanschluss 98 in Abhängigkeit des hydraulischen Drucks an dem Eingangsanschluss 97 durch Verbindung des Bremssteuerdruckanschlusses 98 mit dem Versorgungsanschluss 102 oder einer Entlüftung des Anhängersteuerventils 96 oder Absperren des Bremssteuerdruckanschlusses 98. Darüber hinaus ist für das dargestellte Ausführungsbeispiel in das Anhängersteuerventil 96 das Handbremsventil 77 integriert, so dass auch durch manuelle Betätigung eines Betätigungsorgans 85 Einfluss auf den Bremssteuerdruck an dem Bremssteuerdruckanschluss 98 genommen werden kann. Hinsichtlich weiterer Details zu dem Anhängersteuerventil 96 und Möglichkeiten einer Modifikation desselben wird insbesondere auf die Druckschrift DE 10 2009 045 191 A1 verwiesen, deren Offenbarung zum Gegenstand der vorliegenden Patentanmeldung gemacht wird.

Befinden sich die Magnetventile 67, 68, 70 in nicht bestromten Zustand, was der Fall sein kann bei einem elektrischen Leistungseinbruch oder gezielt Ergebnis der Steuerung durch die Steuereinheitmodule 52, 53 sein kann, wird der Bremssteuerdruck an dem Bremssteuerdruckanschluss 98 des Anhängersteuerventils 96 durch das Anhängersteuerventil 60 von dem Eingangsanschluss 99 zu dem Bremssteuerdruckanschluss 63 und damit zu dem Kupplungskopf Bremse 62 durchgeleitet, so dass die Steuerung des Bremssteuerdrucks durch das Anhängersteuerventil 96 erfolgt. Neben einer derart gebildeten Rückfall- oder Redundanzebene für den elektrischen Leistungseinbruch kann auch während des normalen Betriebs des Zugfahrzeugs mit Anhänger eine alternative Nutzung der Anhängersteuerventile 60, 69 für die Vorgabe des Bremssteuerdrucks erfolgen. Beispielsweise kann in einem Normalbetrieb die Steuerung durch das Anhängersteuerventil 96 erfolgen, während in ausgewählten Betriebssituationen das Anhängersteuerventil 60 die Steuerung des Bremssteuerdrucks übernimmt. Beispielsweise kann mittels des elektrisch angesteuerten Anhängersteuerventils 60 eine Voreilung des Bremssteuerdrucks herbeigeführt werden. Auch möglich ist, dass durch gezielten Eingriff des Anhängersteuerventils 60, beispielsweise bei instabilen Fahrsituationen, die strenge Abhängigkeit des Bremssteuerdrucks von dem Hydraulikdruck, welcher durch das Anhängersteuerventil 96 zwingend vorgegeben ist, temporär aufgehoben wird, wodurch die Möglichkeiten für die Steuerung der Bremsanlage des Anhängers erweitert werden.

Beliebige genannte und dargestellte Bauelemente können singuläre Bauelemente sein, Module bilden, die selektiv miteinander verbindbar sind, beispielsweise aneinander anflanschbar sind, oder zu Baueinheiten zusammengefasst sein. Gemäß Fig. 5 ist abweichend zu Fig. 4 eine Zusammenfassung des Anhängersteuerventils 60, des Sensors 58 und des 2/2-Wege-Magnetventils 94 zu einer Baueinheit 103 erfolgt. Diese verfügt über
- eine Schnittstelle 51 zur Zuführung eines Signals des Sensors 48 zu der Baueinheit 103 und damit zu dem Steuereinheitmodul 52,
- eine Schnittstelle 51 zwecks Verbindung des Steuereinheitmoduls 52 mit dem Sensor 47 und dem Steuereinheitmodul 53 (und über dieses mit den Signalleitungen 90, dem CAN-Bus 91 oder weiteren Steuereinheitmodulen),
- einen pneumatischen Anschuss für den Kupplungskopf Bremse,
- einen pneumatischen Anschluss für den Kupplungskopf Bremse 62,
- jeweils einen pneumatischen Anschluss für den Kupplungskopf Vorrat 1 sowie für die Zweigleitung 7,
- einen Versorgungsanschluss sowie
- einen Eingangsanschluss 99.

Wie dargestellt kann die Baueinheit 103 einen zusätzlichen Steueranschluss besitzen, über welchen der Bremssteuerdruckanschluss 98 des Anhängersteuerventils 96 mit einem pneumatischen Steueranschluss 104 des 2/2-Wege-Magnetventils 94 verbunden ist, dessen Beaufschlagung eine Betätigungswirkung des 2/2-Wege-Magnetventils 94 in die Drosselstellung zur Folge hat. Auch von der Kupplungskopfleitung 5 zweigt innerhalb der Baueinheit 103 eine Steuerleitung ab, welche mit einem Steueranschluss 105 verbunden ist, dessen Druckbeaufschlagung das 2/2-Wege-Magnetventil 94 in seine Durchlassstellung beaufschlagt.

Ergänzend kann (abweichend zu Fig. 5) dem Versorgungsanschluss 102 in dem in Fig. 5 vertikalen Leitungszweig ein Rückschlagventil vorgeordnet sein. Dieses sichert die Aufrechterhaltung eines Drucks an dem Versorgungsanschluss 102 auch dann, wenn die Versorgungsleitung 54 drucklos wird, bspw. durch einen Defekt im Bereich des Kupplungskopfs 1. Somit kann die Funktion der mechanischen Rückfallebene in Form des Anhängersteuerventils 96 aufrecht erhalten werden und gewährleistet werden, dass das 2/2-Wege-Magnetventil in diesem Fall seine Drosselstellung beibehält, was auch gewährleistet sein kann, wenn es zu einem Einbruch der elektrischen Leistungsversorgung kommt.

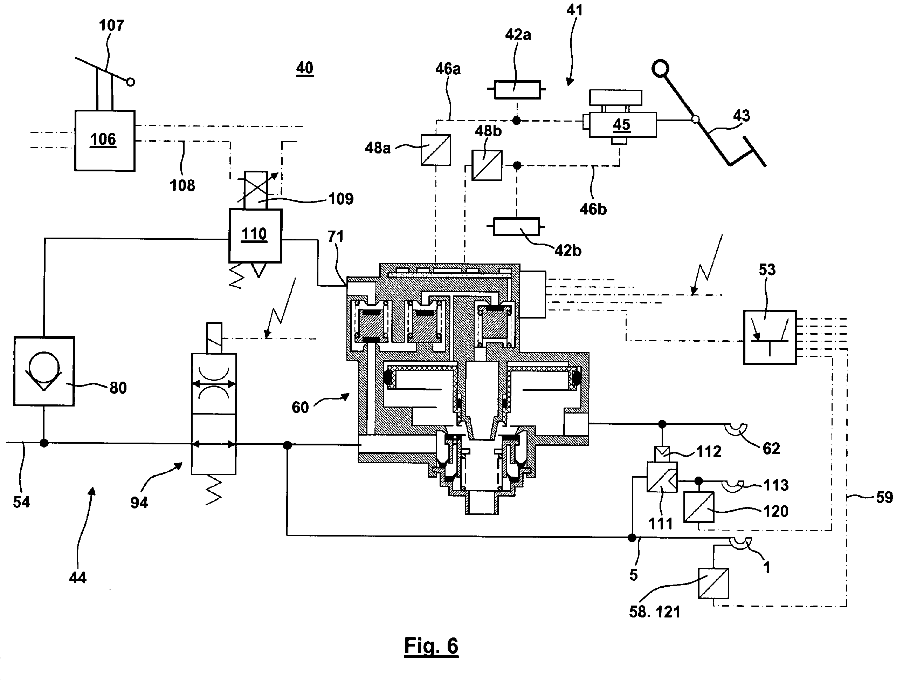

Abweichend zu dem Ausführungsbeispiel gemäß Fig. 3 findet gemäß Fig. 6 anstelle der Kombination des Handbremsventils 77 und des (invertierten) Relaisventils 84 ein elektrisches Handbremsventil 106 Einsatz, welches ein elektrisches Steuersignal je nach Stellung des Betätigungsorgans 107 in einer elektrischen Steuerleitung 108 erzeugt. Das Steuersignal in der Steuerleitung 108 wird einem Steueranschluss 109 eines elektrisch betätigten Proportionalventils 110 zugeführt. Das Proportionalventil 110 wird unter Zwischenschaltung eines Rückschlagventils 80 von der Versorgungsleitung 54 mit Druckluft versorgt und erzeugt einen Bremssteuerdruck an dem Handbremsanschluss 71 des Anhängersteuerventils 60, welcher abhängig ist von dem Steuersignal in der Steuerleitung 108 und damit von der Stellung des Betätigungsorgans 107 des Handbremsventils 106.

Gemäß Fig. 6 ist die hydraulische Bremsanlage 41 zweikreisig ausgebildet, so dass die Betätigung des Bremspedals 43 über Hauptzylinder 45 hydraulische Drücke in den Leitungen 46a, 46b erzeugt, die Betriebsbremsen 42a, 42b der jeweiligen Bremskreise zugeführt werden und über Sensoren 48a, 48b erfasst werden. Die Messsignale der Sensoren 48a, 48b werden über die Schnittstelle 51 dem Steuereinheitmodul 52 zugeführt und durch dieses verarbeitet.

Gemäß Fig. 6 ist des Weiteren eine optionale Modifikation dahingehend erfolgt, dass über die Kupplungskopfleitung 5 ein (invertiertes) Steuerventil mit Druckbegrenzung 111 mit Druckluft versorgt wird, dessen Steueranschluss 112 mit dem Bremssteuerdruck an dem Kupplungskopf Bremse 62 beaufschlagt wird. Ausgangsseitig ist das Steuerventil mit Druckbegrenzung 111 mit einem Kupplungskopf 113 verbunden, wobei der Druck an dem Kupplungskopf 113 über einen Sensor 120 erfasst wird und dem Steuereinheitmodul 53 zugeführt wird. Diese Ausgestaltung ist bestimmt für einen Anhänger mit einer Einleitungsbremse, was vorzugsweise der Fall ist für Anhänger mit einer maximalen Geschwindigkeit, die kleiner ist als 25 km/h. Ein steigender Bremssteuerdruck an dem Kupplungskopf Bremse 62 hat zur Folge, dass infolge der invertierten Ausgestaltung des Steuerventils mit Druckbegrenzung 111 der Druck an dem Kupplungskopf 113 sinkt. Dieser sinkende Druck wird durch das Einleitungs-Anhängerbremsventil des Anhängers wieder in einen steigenden Druck umgewandelt, welcher dann den Betriebsbremsen des Anhängers zugeführt wird.

**Fig. 7** zeigt eine Ausführungsform mit einem Handbremsventil 77, dessen Ausgangsdruck nicht über ein Relaisventil, sondern unmittelbar dem Anhängersteuerventil 60 zugeführt wird. Hier findet entsprechend Fig. 6 eine zweikreisige hydraulische Bremsanlage 41 Einsatz und exemplarisch ist die pneumatische Bremsanlage 44 für einen Anhänger mit Einleitungsbremse bestimmt. Gemäß Fig. 7 findet eine Baueinheit 114 Einsatz, in welche
- das Rückschlagventil 80,
- das 2/2-Wege-Magnetventil 94,
- ein Modul 115 mit einem Sensor 116 zur Erfassung des Ausgangsdrucks des Handbremsventils 77, den Sensoren 48a, 48b, einem Sensor 117 zur Erfassung des Bremssteuerdrucks, einem Sensor 118 zur Erfassung des Drucks ausgangsseitig des 2/2-Wege-Magnetventils 94 und einem Sensor 119 zur Erfassung des Drucks in der Versorgungsleitung 54
   integriert sind. Die Baueinheit 114 besitzt auch
- einen pneumatischen Anschluss für den Anschluss der Versorgungsleitung 54,
- einen pneumatischen Anschluss zur Versorgung des Handbremsventils 77 mit Druckluft,
- einen pneumatischen Eingangsanschluss für die Zuführung des Ausgangsdrucks des Handbremsventils 77,
- einen Bremssteuerdruckanschluss 63 und
- einen Ausgangsanschluss für die Versorgung der Kupplungskopfleitung 5 des Kupplungskopfs 1.

Des Weiteren besitzt die Baueinheit 114 hydraulische Anschlüsse zur hydraulischen Verbindung mit den Leitungen 46a, 46b. Schließlich besitzt die Baueinheit 114 elektrische Schnittstellen zur Zuführung des Signals des Drehzahlsensors 93 und für eine Kommunikation der Steuereinheitmodule 52, 53, 95 und weiteren Sensoren und Steuereinheitmodulen.

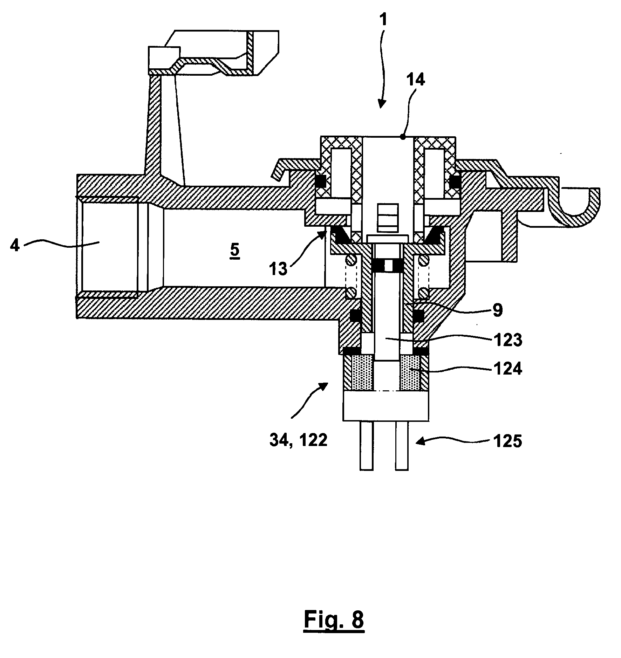

Während für die Ausführungsformen gemäß Fig. 1 bis 7 der Sensor 34 als Drucksensor 121 ausgebildet war, zeigt Fig. 8 eine andere Ausgestaltung eines Kupplungskopfes 1, in welcher der Sensor 34 als Wegsensor 122 ausgebildet ist. In diesem Fall ist an dem Ventilkörper 9 ein Kern 123 befestigt, sodass dieser mit dem Ventilkörper 9 von der in Fig. 8 dargestellten Schließstellung bei Anschluss des Kupplungskopfes 1 an einen Gegen-Kupplungskopf in die Öffnungsstellung bewegt wird. Der Kern 123 verändert seine Erstreckung in einer Spule 124 des Wegsensors 122, womit ein Messsignal des Wegsensors 122 erzeugt werden kann. Der Wegsensor 122 ist mit einem Stecker oder einer Schnittstelle 125 ausgestattet, über welchen einerseits eine Leistungsversorgung des Wegsensors 122 erfolgen kann und andererseits der Wegsensor 122 mit einer Schnittstelle 51, einem Steuereinheitmodul 53, einem Steuereinheitmodul 95 ... kommunizieren kann, sodass dort eine Auswertung und Verwendung des Messsignals wie zuvor erläutert erfolgen kann. Es versteht sich, dass anstelle der Ausbildung des Wegsensors 122 mit Kern 123 und Spule 124 auch jedwedes andere Konzept für einen Wegsensor 122 Einsatz finden kann, wobei auch ein Geschwindigkeitssensor eingesetzt werden kann, beispielsweise mit einer Integration des Geschwindigkeitssignals zu einem Wegsignal.

Grundsätzlich sind Kupplungsköpfe unterschiedlicher Ausgestaltung insbesondere hinsichtlich der technischen Funktion, des konstruktiven Aufbaus, der Kupplung mit einem Gegen-Kupplungskopf bekannt, beispielsweise als Zweileitungs-Kupplungsköpfe des Unternehmens WABCO in den Ausführungsarten 952 200 021 0, 952 200 210 0, 952 200 221 0, 952 200 022 0, 952 200 222 0 sowie als Duo-Matic-Schnellkupplungen für Anhänger oder Sattelanhänger in Ausführungsarten für Gliederzüge 452 802 009 0, 452 804 012 0 und für Sattelzüge 452 805 004 0 und 452 803 005 0. In sämtliche derartigen bekannten Kupplungsköpfe können die erfindungsgemäßen Maßnahmen integriert werden oder kumulativ angewendet werden.

### BEZUGSZEICHENLISTE

- 1: Kupplungskopf
- 2: Grundkörper
- 3: Befestigungselement
- 4: Anschluss
- 5: Kupplungskopfleitung
- 6: Anschluss
- 7: Zweigleitung
- 8: Verbindungsbereich
- 9: Ventilkörper
- 10: Ventilkörperteil
- 11: Ventilkörperteil
- 12: Ventilsitz
- 13: Ventil
- 14: Ausgangsöffnung
- 15: Kupplungskopfraum
- 16: Führungsbohrung
- 17: Dichtelement
- 18: Vertikalschenkel
- 19: Durchgangsbohrung
- 20: Horizontalschenkel
- 21: Bund
- 22: Ventildichtung
- 23: Druckfeder
- 24: Grundschenkel
- 25: Seitenschenkel
- 26: Seitenschenkel
- 27: Verdickung
- 28: Führungsbohrung
- 29: Dichtelement
- 30: Durchgangsbohrung
- 31: Absatz
- 32: Kontaktfläche
- 33: Durchgangsausnehmung
- 34: Sensor
- 35: Baueinheit
- 36: Baueinheit
- 37: elektrische Schnittstelle
- 38: elektrische Signalleitung
- 39: Steuereinheit
- 40: landwirtschaftliches Zugfahrzeug
- 41: hydraulische Bremsanlage
- 42: Betriebsbremse
- 43: Bremspedal
- 44: pneumatische Bremsanlage
- 45: Hauptzylinder
- 46: hydraulische Leitung
- 47: Sensor
- 48: Sensor
- 49: Signalleitung
- 50: Signalleitung
- 51: Schnittstelle
- 52: Steuereinheitmodul
- 53: Steuereinheitmodul
- 54: Versorgungsleitung
- 55: Verzweigung
- 56: Versorgungsanschluss
- 57: Leitung
- 58: Sensor
- 59: Signalleitung
- 60: Anhängersteuerventil
- 61: Ein-/Auslassventil
- 62: Kupplungskopf Bremse
- 63: Bremssteuerdruckanschluss
- 64: Entlüftung
- 65: Wiegekolben
- 66: Steuerraum
- 67: Magnetventil
- 68: Magnetventil
- 69: Zentralleitung
- 70: Magnetventil
- 71: Handbremsanschluss
- 72: Ventilkörper
- 73: Ventilsitz
- 74: Gehäuse
- 75: Ventilsitz
- 76: Druckfeder
- 77: Handbremsventil
- 78: Verzweigung
- 79: Leitung
- 80: Rückschlagventil
- 81: Verzweigung
- 82: Eingangsanschluss
- 83: Eingangsanschluss
- 84: Relaisventil
- 85: Betätigungsorgan
- 86: Parkbremsanschluss
- 87: Entlüftung
- 88: Steuerausgang
- 89: Steueranschluss
- 90: Signalleitung
- 91: CAN-Bus
- 92: Joysticks
- 93: Raddrehzahlsensor
- 94: 2/2-Wege-Magnetventil
- 95: Steuereinheitmodul
- 96: Anhängersteuerventil
- 97: Eingangsanschluss
- 98: Bremssteuerdruckanschluss
- 99: Eingangsanschluss
- 100: Stellkolben
- 101: Wiegekolben
- 102: Versorgungsanschluss
- 103: Baueinheit
- 104: Steueranschluss
- 105: Steueranschluss
- 106: Handbremsventil
- 107: Betätigungsorgan
- 108: Steuerleitung
- 109: Steueranschluss
- 110: Proportionalventil
- 111: Steuerventil mit Druckbegrenzung
- 112: Steueranschluss
- 113: Kupplungskopf
- 114: Baueinheit
- 115: Modul
- 116: Sensor
- 117: Sensor
- 118: Sensor
- 119: Sensor
- 120: Sensor
- 121: Drucksensor
- 122: Wegsensor
- 123: Kern
- 124: Spule
- 125: Stecker

## Patentansprüche

1. Landwirtschaftliches Zugfahrzeug (40) mit
a) einer hydraulischen Bremsanlage (41),
b) einer pneumatischen Bremsanlage (44) für einen mit dem Zugfahrzeug (40) koppelbaren Anhänger,
c) einem pneumatischen Kupplungskopf (1), über welchen bei angekuppeltem GegenKupplungskopf des Anhängers Druckluft zwischen dem Zugfahrzeug (40) und dem Anhänger übertragbar ist,
d) einem in den Kupplungskopf (1) integrierten Ventil (13),
**dadurch gekennzeichnet, dass**
e) das in den Kupplungskopf (1) integrierte Ventil (13) zwischen eine Kupplungskopfleitung (5) und eine Zweigleitung (7) zwischengeschaltet ist und
f) das in den Kupplungskopf (1) integrierte Ventil (13) mit dem Ankuppeln des Gegen-Kupplungskopfs automatisch in eine Öffnungsstellung überführt wird, in der die Kupplungskopfleitung (5) mit der Zweigleitung (7) pneumatisch verbunden ist,
g) ein Sensor (34; 58) vorhanden ist, der den Druck in der Zweigleitung (7) erfasst.

2. Landwirtschaftliches Zugfahrzeug (40) nach Anspruch 1, **dadurch gekennzeichnet, dass** ein von dem Sensor (34; 58) erzeugtes elektrisches Signal einer Steuereinheit (39; 52, 53, 95) zugeführt wird.

3. Landwirtschaftliches Zugfahrzeug (40) nach Anspruch 1 oder 2, **dadurch gekennzeichnet, dass** mit dem Kupplungskopf (1), dem Ventil (13) und dem Sensor (34) eine Baueinheit (36) gebildet ist.

4. Landwirtschaftliches Zugfahrzeug (40) nach Anspruch 1 oder 2, **dadurch gekennzeichnet, dass**
a) mit dem Kupplungskopf (1) und dem Ventil (13) eine Baueinheit (35) gebildet ist,
b) der Sensor (58) entfernt von der Baueinheit (35) angeordnet ist und
c) der Sensor (58) und die Baueinheit (35) über eine Leitung (57) oder die Zweigleitung (7) miteinander verbunden sind.

5. Landwirtschaftliches Zugfahrzeug (40) nach einem der Ansprüche 1 bis 4, **dadurch gekennzeichnet, dass**
a) das Ventil (13) als Sitzventil ausgebildet ist mit einem Ventilkörper (9), der bei nicht angekuppeltem Gegen-Kupplungskopf des Anhängers über eine Feder (23) gegen einen Ventilsitz (12) gepresst wird, und
b) der Ventilkörper (9) mit dem Ankuppeln des Gegen-Kupplungskopfs durch ein Kontaktelement von dem Ventilsitz (12) weg unter Beaufschlagung der Feder (23) bewegt wird.

6. Landwirtschaftliches Zugfahrzeug (40) nach einem der Ansprüche 2 bis 5, **dadurch gekennzeichnet, dass** die Steuereinheit (39; 52, 53, 95) mit Steuerlogik ausgestattet ist, welche
a) eine Antriebsleistung,
b) eine Bremsleistung,
c) eine Fahrstabilitätsregelung und/oder
d) eine Fahrdynamikregelung des Zugfahrzeug
in Abhängigkeit von dem von dem Sensor (34; 58) zur Erfassung des Drucks in der Zweigleitung (7)erzeugten Signal beeinflusst.

7. Landwirtschaftliches Zugfahrzeug (40) nach einem der Ansprüche 2 bis 6, **dadurch gekennzeichnet, dass** die Steuereinheit (39; 52, 53, 95) mit Steuerlogik ausgestattet ist, welche den Betriebszustand eines Getriebes in Abhängigkeit von dem von dem Sensor (34; 58) erzeugten Signal beeinflusst.

8. Landwirtschaftliches Zugfahrzeug (40) nach einem der Ansprüche 2 bis 7, **dadurch gekennzeichnet, dass** die Steuereinheit (39; 52, 53, 95) mit Steuerlogik ausgestattet ist, welche eine Abbremsung des Zugfahrzeugs (40) ohne Betätigung der Betriebsbremsen (42) des Zugfahrzeugs erkennt und bei Vorliegen eines von dem Sensor (34; 58) erzeugten Signals, welches indiziert, dass ein Anhänger an das Zugfahrzeug (40) angekuppelt ist, ein Anhängersteuerventil (60) so ansteuert, dass dieses einen pneumatischen Bremssteuerdruck für den Anhänger erzeugt.

9. Landwirtschaftliches Zugfahrzeug (40) nach Anspruch 8, **dadurch gekennzeichnet, dass** die Steuereinheit (39; 52, 53, 95) mit Steuerlogik ausgestattet ist, welche eine Abbremsung des Zugfahrzeugs (40) ohne Betätigung der Betriebsbremsen (42) des Zugfahrzeugs (40) in Abhängigkeit der Stellung eines von dem Fahrer betätigten Joysticks (92) erkennt.

10. Landwirtschaftliches Zugfahrzeug (40) nach einem der Ansprüche 2 bis 9 **dadurch gekennzeichnet, dass** die Steuereinheit (39; 52, 53, 95) mit Steuerlogik ausgestattet ist, welche in Abhängigkeit des von dem Sensor (34; 58) erzeugten Signals ein elektrisches Bremslichtsignal für den Anhänger erzeugt.

11. Landwirtschaftliches Zugfahrzeug (40) nach einem der Ansprüche 2 bis 10, **dadurch gekennzeichnet, dass** die Steuereinheit (39; 52, 53, 95) mit Steuerlogik ausgestattet ist, welche eine Anhängersteuerung durchführt, wobei die Anhängersteuerung in Abhängigkeit des von dem Sensor (34; 58) erzeugten Signals erfolgt.

12. Landwirtschaftliches Zugfahrzeug (40) nach einem der Ansprüche 2 bis 11, **dadurch gekennzeichnet, dass** die Steuereinheit (39; 52, 53, 95) mit Steuerlogik ausgestattet ist, welche eine Geschwindigkeitsbegrenzung in Abhängigkeit des von dem Sensor (34; 58) erzeugten Signals durchführt.

13. Landwirtschaftliches Zugfahrzeug (40) nach einem der Ansprüche 2 bis 12, **dadurch gekennzeichnet, dass** die Steuereinheit (39; 52, 53, 95) mit Steuerlogik ausgestattet ist, welche eine Schaltstellung eines Offroad-Schalters ermittelt, wobei die Steuereinheit (39; 52, 53, 95) eine automatische Modifikation einer Bremskraft des Anhängers und/oder des Zugfahrzeugs (40)
a) in Abhängigkeit von der Stellung des Offroad-Schalters und
b) in Abhängigkeit des von dem Sensor (34; 58) erzeugten Signals
vornimmt.

14. Landwirtschaftliches Zugfahrzeug (40) nach einem der Ansprüche 2 bis 13, **dadurch gekennzeichnet, dass** die Steuereinheit (39; 52, 53, 95) mit Steuerlogik ausgestattet ist, welche in Abhängigkeit des von dem Sensor (34; 58) erzeugten Signals eine Streckbremsfunktion aktiviert.

15. Landwirtschaftliches Zugfahrzeug (40) nach einem der Ansprüche 2 bis 14, **dadurch gekennzeichnet, dass** die Steuereinheit (39; 52, 53, 95) mit Steuerlogik ausgestattet ist, welche in Abhängigkeit des von dem Sensor (34; 58) erzeugten Signals eine Abschätzung einer Kopplungskraft zwischen Zugfahrzeug (40) und Anhänger vornimmt.

16. Landwirtschaftliches Zugfahrzeug (40) nach Anspruch 15, **dadurch gekennzeichnet, dass** die Steuereinheit (39; 52, 53, 95) in Abhängigkeit der geschätzten Kopplungskraft eine Beeinflussung
a) einer Antriebsleistung,
b) einer Bremskraft des Zugfahrzeugs,
c) einer Bremskraft des Anhängers,
d) einer Fahrstabilitätsregelung und/oder
e) einer Fahrdynamikregelung des Zugfahrzeug
f) einer Kopplungskraft
vornimmt.

17. Landwirtschaftliches Zugfahrzeug (40) nach einem der vorhergehenden Ansprüche, **dadurch gekennzeichnet, dass** das Ventil (13), welches zwischen die Kupplungskopfleitung (5) und die Zweigleitung (7) zwischengeschaltet ist, auch zwischen die Kopplungskopfleitung (5) und eine Ausgangsöffnung (14) zwischengeschaltet ist.

18. Pneumatische Kupplungskopf (1) zur Kopplung eines Zugfahrzeugs, insbesondere eines landwirtschaftlichen Zugfahrzeugs (40) nach einem der Ansprüche 1 bis 17, mit einem Anhänger mit
a) einem in den Kupplungskopf (1) integrierten Ventil (13) mit einem Ventilkörper (9), der
aa) eine Schließstellung besitzt, in welchem der Kupplungskopf (1) gegenüber der Umgebung abgeschlossen ist, und
ab) eine Öffnungsstellung besitzt, in welcher der Kupplungskopf (1) pneumatisch mit einem Gegen-Kupplungskopf verbunden ist,
**dadurch gekennzeichnet, dass**
b) der Ventilkörper (9) mit dem Kupplungsvorgang des Kupplungskopfes (1) mit einem Gegen-Kupplungskopf automatisch von der Schließstellung in die Öffnungsstellung überführt wird,
c) ein Sensor (34, 58) vorhanden ist, der unmittelbar oder mittelbar die Stellung des Ventilkörpers (9) des in den Kupplungskopf (1) integrierten Ventils (13) erfasst.

19. Pneumatischer Kupplungskopf (1) nach Anspruch 18, **dadurch gekennzeichnet, dass** der Sensor (34, 58) ein Wegsensor (122) ist, der eine Stellung des Ventilkörpers (9) erfasst.

20. Pneumatischer Kupplungskopf (1) nach Anspruch 18, **dadurch gekennzeichnet, dass** der Sensor (34, 58) ein Drucksensor (121) ist, der einen von der Stellung des Ventilkörpers (9) abhängigen Druck erfasst.

21. Pneumatischer Kupplungskopf (1) nach Anspruch 20, **dadurch gekennzeichnet, dass**
a) das Ventil (13) zwischen eine Kupplungskopfleitung (5) und eine Zweigleitung (7) zwischengeschaltet ist, wobei
b) in der Schließstellung des Ventilkörpers (9) die Kupplungskopfleitung (5) pneumatisch von der Zweigleitung (7) getrennt ist und die Zweigleitung (7) entlüftet ist und
c) in der Öffnungsstellung des Ventilkörpers die Kupplungskopfleitung (5) pneumatisch mit der Zweigleitung (7) verbunden ist, und
d) der Drucksensor (122) den Druck in der Zweigleitung (7) erfasst.

22. Pneumatischer Kupplungskopf (1) nach Anspruch 19, **dadurch gekennzeichnet, dass** mit dem Kupplungskopf (1), dem Ventil (13) und dem Sensor (34) eine Baueinheit (36) gebildet ist.

## Claims

1. Agricultural tractor (40) with
a) a hydraulical brake system (41),
b) a pneumatical brake system (44) for a trailer which can be coupled to the tractor (40),
c) a pneumatical coupling head (1) by which, when coupled to a counter coupling head of the trailer, it is possible to transfer pressurized air between the tractor (40) and the trailer can be transferred,
d) a valve (13) integrated into the coupling head (1),
**characterised in that**
e) the valve (13) integrated into the coupling head (1) is interposed between a coupling head line (5) and a branching line (7) and
f) the valve (13) integrated into the coupling head (1) is automatically transferred into an open position with the coupling to a counter coupling head wherein in the open position the coupling head line (5) is pneumatically connected to the branching line (7),
g) a sensor (37; 58) being provided which senses the pressure in the branching line (7).

2. Agricultural tractor (40) of claim 1, **characterised in that** an electrical signal produced by the sensor (34; 58) is transferred to a control unit (39; 52, 53,95).

3. Agricultural tractor (40) of claim 1 or 2, **characterised in that** with the coupling head (1), the valve (13) and the sensor (34) a constructional unit (36) is formed.

4. Agricultural tractor (40) of claim 1 or 2, **characterised in that**
a) a constructional unit (35) is formed with the coupling head (1) and the valve (13)
b) the sensor (58) is located remote from the constructional unit (35) and
c) the sensor (58) and the constructional unit (35) are connected to each other by a line (57) or the branching line (7).

5. Agricultural tractor (40) of one of claims 1 to 4, **characterised in that**
a) the valve (13) is a seated valve with a valve body (9) which is pressed against a valve seat (12) by a spring (23) for uncoupled counter coupling head of the trailer and
b) with the coupling of the counter coupling head the valve body (9) is moved by a contact element away from the valve seat (12) under the bias of the spring (23).

6. Agricultural tractor (40) of one of claims 2 to 5, **characterised in that** the control unit (39; 52, 53, 95) comprises control logic which changes
a) a driving power,
b) a braking power,
c) a driving stability control and/or
d) a driving dynamic control of the tractor
dependent on a signal produced by the sensor (34; 58) for sensing the pressure in the branching line (7).

7. Agricultural tractor (40) of one of claims 2 to 6, **characterised in that** the control unit (39; 52, 53, 95) comprises control logic which changes the operating state of a transmission dependent on the signal produced by the sensor (34; 58).

8. Agricultural tractor (40) of one of claim 2 to 7, **characterised in that** the control unit (39; 52, 53, 95) comprises control logic which detects a braking of the tractor (40) without an actuation of the service brakes (42) of the tractor and for a signal produced by the sensor (34; 58) which indicates that a trailer is coupled to the tractor (40) controls the trailer control valve (60) in a way such that that the trailer control valve (60) produces a pneumatical brake control pressure for the trailer.

9. Agricultural tractor (40) of claim 8, **characterised in that** the control unit (39; 52, 53, 95) comprises control logic which detects a braking of the tractor (40) without an actuation of the service brakes (42) of the tractor (40) dependent on the position of a joystick (92) actuated by the driver.

10. Agricultural tractor (40) of one of claims 2 to 9, **characterised in that** the control unit (39; 52, 53, 95) comprises control logic which produces an electrical brake light signal for the trailer dependent on the signal produced by the sensor (34; 58).

11. Agricultural tractor (40) of one of claims 2 to 10, **characterised in that** the control unit (39; 52, 53, 95) comprises control logic which controls the trailer wherein the trailer control is performed dependent on the signal produced by the sensor (34; 58).

12. Agricultural tractor (40) of one claims 2 to 11, **characterised in that** the control unit (39; 52, 53, 95) comprises control logic which performs a limitation of the velocity dependent on the signal produced by the sensor (34; 58).

13. Agricultural tractor (40) of one of claims 2 to 12, **characterised in that** the control unit (39; 52, 53, 95) comprises control logic which detects a switching position of an off-road switch, the control unit (39; 52, 53, 95) automatically modifying a brake force of the trailer and/or of the tractor (40)
a) dependent on the position of the off-road switch and
b) dependent on the signal produced by the sensor (34; 58).

14. Agricultural tractor (40) of one of claims 2 to 13, **characterised in that** the control unit (39; 52, 53, 95) comprises control logic which activates a stretching brake function dependent on the signal produced by the sensor (34; 58).

15. Agricultural tractor (40) of one of claims 2 to 14, **characterised in that** the control unit (39; 52, 53, 95) comprises control logic which estimates a coupling force between the tractor (40) and the trailer dependent on the signal produced by the sensor (34; 58).

16. Agricultural tractor (40) of claim 15, **characterised in that** the control unit (39; 52, 53, 95) changes
a) a driving power,
b) a braking force of the tractor,
c) a braking force of the trailer,
d) a driving stability control and/or
e) a driving dynamic control of the tractor
f) a coupling force
dependent on the estimated coupling force.

17. Agricultural tractor (40) of one of the preceding claims, **characterised in that** the valve (13) which is interposed between the coupling head line (5) and the branching line (7) is also interposed between the coupling head line (5) and an outlet opening (14).

18. Pneumatical coupling head (1) for coupling a tractor, in particular an agricultural tractor (40) of one of claims 1 to 17, to a trailer with
a) a valve (13) integrated into the coupling head (1) having a valve body (9) which
aa) comprises a closed position wherein the coupling head (1) is closed against the environment and
ab) comprises an open position wherein the coupling head (1) is pneumatically connected to a counter coupling head,
**characterised in that**
b) with the coupling process of the coupling head (1) to a counter coupling head the valve body (9) is automatically transferred from the closed position into the open position,
c) a sensor (34, 58) is provided which directly or indirectly senses the position of the valve body (9) of the valve (13) integrated into the coupling head (1).

19. Pneumatical coupling head (1) of claim 18, **characterised in that** the sensor (34, 58) is a displacement sensor (122) which senses the position of the valve body (9).

20. Pneumatical coupling head (1) of claim 18, **characterised in that** the sensor (34, 58) is a pressure sensor (121) which senses a pressure which is dependent on the position of the valve body (9).

21. Pneumatical coupling head (1) of claim 20, **characterised in that**
a) the valve (13) is interposed between a coupling head line (5) and a branching line (7), wherein
b) in the closed position the valve body (9) pneumatically separates the coupling head line (5) from the branching line (7) and the branching line (7) is deaerated and
c) in the open position of the valve body the coupling head line (5) is pneumatically connected to the branching line (7) and
d) the pressure sensor (122) senses the pressure in the branching line (7).

22. Pneumatical coupling head (1) of claim 19, **characterised in that** a constructional unit (36) is formed with the coupling head (1), the valve (13) and the sensor (34).

## Revendications

1. Véhicule de traction (40) agricole, avec
a) un système de freinage hydraulique (41),
b) un système de freinage pneumatique (44) pour une remorque pouvant être accouplée au véhicule de traction (40),
c) une tête d'accouplement (1) pneumatique par le biais de laquelle, quand la tête d'accouplement antagoniste de la remorque est accouplée, de l'air comprimé peut être transféré entre le véhicule de traction (40) et la remorque,
d) une soupape (13) intégrée dans la tête d'accouplement (1), **caractérisé en ce que**
e) la soupape (13) intégrée dans la tête d'accouplement (1) est intercalée entre une conduite de tête d'accouplement (5) et une conduite dérivée (7) et
f) la soupape (13) intégrée dans la tête d'accouplement (1) est, avec l'accouplement de la tête d'accouplement antagoniste, conduite automatiquement dans une position d'ouverture dans laquelle la conduite de tête d'accouplement (5) est raccordée pneumatiquement à la conduite dérivée (7),
g) il y a un capteur (34; 58) qui détecte la pression dans la conduite dérivée (7).

2. Véhicule de traction (40) agricole selon la revendication 1, **caractérisé en ce qu'**un signal électrique produit par le capteur (34; 58) est acheminé à une unité de commande (39; 52; 53; 95).

3. Véhicule de traction (40) agricole selon la revendication 1 ou 2, **caractérisé en ce qu'**une unité de construction (36) est formée avec la tête d'accouplement (1), la soupape (13) et le capteur (34).

4. Véhicule de traction (40) agricole selon la revendication 1 ou 2, **caractérisé en ce que**
a) une unité de construction (35) est formée avec la tête d'accouplement (1) et la soupape (13),
b) le capteur (58) est disposé à distance de l'unité de construction (35) et
c) le capteur (58) et l'unité de construction (35) sont raccordés l'un à l'autre par le biais d'une conduite (57) ou de la conduite dérivée (7).

5. Véhicule de traction (40) agricole selon l'une des revendications 1 à 4, **caractérisé en ce que**
a) la soupape (13) est constituée en tant que soupape à siège avec un corps de soupape (9) qui, quand la tête d'accouplement antagoniste de la remorque n'est pas accouplée, est pressé contre un siège de soupape (12) par le biais d'un ressort (23), et
b) le corps de soupape (9) est, avec l'accouplement de la tête d'accouplement antagoniste par un élément de contact, éloigné du siège de soupape (12) en étant exposé à l'action du ressort (23).

6. Véhicule de traction (40) agricole selon l'une des revendications 2 à 5, **caractérisé en ce que** l'unité de commande (39; 52; 53; 95) est équipée d'une logique de commande qui agit sur
a) une puissance d'entraînement
b) une puissance de freinage
c) une régulation de la stabilité de conduite et/ou
d) une régulation de la dynamique de conduite du véhicule de traction
en fonction du signal produit par le capteur (34 ; 58) destiné à la détection de la pression dans la conduite dérivée (7).

7. Véhicule de traction (40) agricole selon l'une des revendications 2 à 6, **caractérisé en ce que** l'unité de commande (39; 52; 53; 95) est équipée d'une logique de commande qui agit sur l'état de fonctionnement d'une transmission en fonction du signal produit par le capteur (34; 58).

8. Véhicule de traction (40) agricole selon l'une des revendications 2 à 7, **caractérisé en ce que** l'unité de commande (39; 52; 53; 95) est équipée d'une logique de commande qui détecte une décélération du véhicule de traction (40) sans actionnement des freins de service (42) du véhicule de traction et, en présence d'un signal produit par le capteur (34; 58) qui indique qu'une remorque est accouplée au véhicule de traction (40), pilote une valve de commande de remorque (60) de telle sorte que celle-ci produit une pression de commande de frein pneumatique pour la remorque.

9. Véhicule de traction (40) agricole selon la revendication 8, **caractérisé en ce que** l'unité de commande (39; 52; 53; 95) est équipée d'une logique de commande qui détecte une décélération du véhicule de traction (40) sans actionnement des freins de service (42) du véhicule de traction en fonction de la position d'un joystick (92) actionné par le conducteur.

10. Véhicule de traction (40) agricole selon l'une des revendications 2 à 9, **caractérisé en ce que** l'unité de commande (39; 52; 53; 95) est équipée d'une logique de commande qui, en fonction du signal produit par le capteur (34; 58), produit un signal de feu stop électrique pour la remorque.

11. Véhicule de traction (40) agricole selon l'une des revendications 2 à 10, **caractérisé en ce que** l'unité de commande (39; 52; 53; 95) est équipée d'une logique de commande qui réalise une commande de remorque, la commande de remorque s'effectuant en fonction du signal produit par le capteur (34; 58).

12. Véhicule de traction (40) agricole selon l'une des revendications 2 à 11, **caractérisé en ce que** l'unité de commande (39; 52; 53; 95) est équipée d'une logique de commande qui réalise une limitation de la vitesse en fonction du signal produit par le capteur (34; 58).

13. Véhicule de traction (40) agricole selon l'une des revendications 2 à 12, **caractérisé en ce que** l'unité de commande (39; 52; 53; 95) est équipée d'une logique de commande qui détermine une position de commutation d'un commutateur tout-terrain, l'unité de commande (39; 52; 53; 95) procédant à une modification automatique d'une force de freinage de la remorque et/ou du véhicule de traction (40)
a) en fonction de la position du commutateur tout-terrain et
b) en fonction du signal produit par le capteur (34; 58).

14. Véhicule de traction (40) agricole selon l'une des revendications 2 à 13, **caractérisé en ce que** l'unité de commande (39; 52; 53; 95) est équipée d'une logique de commande qui active une fonction de frein de maintien en ligne en fonction du signal produit par le capteur (34; 58).

15. Véhicule de traction (40) agricole selon l'une des revendications 2 à 14, **caractérisé en ce que** l'unité de commande (39; 52; 53; 95) est équipée d'une logique de commande qui procède à une estimation d'une force d'accouplement entre le véhicule de traction (40) et la remorque en fonction du signal produit par le capteur (34; 58).

16. Véhicule de traction (40) agricole selon la revendication 15, **caractérisé en ce que** l'unité de commande (39; 52; 53; 95) procède à une action sur
a) une puissance d'entraînement,
b) une force de freinage du véhicule de traction,
c) une force de freinage de la remorque,
d) une régulation de la stabilité de conduite et/ou
e) une régulation de la dynamique de conduite du véhicule de traction,
f) une force d'accouplement
en fonction de la force d'accouplement estimée.

17. Véhicule de traction (40) agricole selon l'une des revendications précédentes, **caractérisé en ce que** la soupape (13) qui est intercalée entre la conduite de tête d'accouplement (5) et la conduite dérivée (7) est également intercalée entre la conduite de tête d'accouplement (5) et une ouverture de sortie (14).

18. Tête d'accouplement (1) pneumatique destinée à l'accouplement d'un véhicule de traction, en particulier d'un véhicule de traction (40) agricole selon l'une des revendications 1 à 17, avec une remorque avec
a) une soupape (13) intégrée dans la tête d'accouplement (1) avec un corps de soupape (9) qui
aa) possède une position de fermeture dans laquelle la tête d'accouplement (1) est fermée par rapport à l'environnement, et qui
ab) possède une position d'ouverture dans laquelle la tête d'accouplement (1) est raccordée pneumatiquement à une tête d'accouplement antagoniste,
**caractérisée en ce que**
b) le corps de soupape (9), avec le processus d'accouplement de la tête d'accouplement (1) avec une tête d'accouplement antagoniste, est automatiquement conduit de la position de fermeture dans la position d'ouverture,
c) il y a un capteur (34; 58) qui détecte directement ou indirectement la position du corps de soupape (9) de la soupape (13) intégrée dans la tête d'accouplement (1).

19. Tête d'accouplement (1) pneumatique selon la revendication 18, **caractérisée en ce que** le capteur (34; 58) est un capteur de déplacement (122) qui détecte une position du corps de soupape (9).

20. Tête d'accouplement (1) pneumatique selon la revendication 18, **caractérisée en ce que** le capteur (34; 58) est un capteur de pression (121) qui détecte une pression qui est fonction de la position du corps de soupape (9).

21. Tête d'accouplement (1) pneumatique selon la revendication 20, **caractérisée en ce que**
a) la soupape (13) est intercalée entre une conduite de tête d'accouplement (5) et une conduite dérivée (7),
b) la conduite de tête d'accouplement (5) étant, dans la position de fermeture du corps de soupape (9), séparée pneumatiquement de la conduite dérivée (7), et la conduite dérivée (7) étant purgée d'air, et
c) la conduite de tête d'accouplement (5) étant, dans la position d'ouverture du corps de soupape, raccordée pneumatiquement à la conduite dérivée (7), et
d) le capteur de pression (122) détectant la pression dans la conduite dérivée (7).

22. Tête d'accouplement (1) pneumatique selon la revendication 19, **caractérisée en ce qu'**une unité de construction (36) est formée avec la tête d'accouplement (1), la soupape (13) et le capteur (34).
